(19) **Europäisches Patentamt / European Patent Office / Office européen des brevets**

(11) **EP 4 558 940 B1**

(12) # EUROPEAN PATENT SPECIFICATION

(45) Date of publication and mention
of the grant of the patent:
**13.05.2026 Bulletin 2026/20**

(21) Application number: **24751931.7**

(22) Date of filing: **17.07.2024**

(51) International Patent Classification (IPC):
*G06Q 10/20* *(2023.01)* *G06Q 10/0635* *(2023.01)*
*G06Q 10/0637* *(2023.01)* *G06Q 10/0631* *(2023.01)*
*G06N 20/00* *(2019.01)*

(52) Cooperative Patent Classification (CPC):
**G06Q 10/0635; G06N 20/00; G06Q 10/06312;**
**G06Q 10/06375; G06Q 10/20**

(86) International application number:
**PCT/US2024/038359**

(87) International publication number:
**WO 2025/019572 (23.01.2025 Gazette 2025/04)**

(54) **SYSTEMS AND METHODS FOR GREENHOUSE GAS MITIGATION**

SYSTEME UND VERFAHREN ZUR TREIBHAUSGASABSCHWÄCHUNG

SYSTÈMES ET PROCÉDÉS D'ATTÉNUATION DE GAZ À EFFET DE SERRE

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **17.07.2023 US 202363514040 P**

(43) Date of publication of application:
**28.05.2025 Bulletin 2025/22**

(73) Proprietor: **X Development LLC**
**Mountain View, CA 94043 (US)**

(72) Inventors:
• **BRONEVETSKY, Grigory**
**Mountain View, California 94043 (US)**
• **PRADHAN, Salil Vijaykumar**
**Mountain View, California 94043 (US)**

• **STIVORIC, John Michael**
**Mountain View, California 94043 (US)**
• **WILLIAMS, Dominic Deshawn**
**Mountain View, California 94043 (US)**
• **BOISSEREE, Kaitlin Marie**
**Mountain View, California 94043 (US)**
• **SINGAL, Dhruv**
**Mountain View, California 94043 (US)**
• **CHONA, Ashish Jagmohan**
**Mountain View, California 94043 (US)**

(74) Representative: **Anderson, Oliver Ben et al**
**Venner Shipley LLP**
**200 Aldersgate**
**London EC1A 4HD (GB)**

(56) References cited:
**US-A1- 2002 138 318    US-A1- 2012 290 104**
**US-A1- 2022 391 921**

EP 4 558 940 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Claim of Priority

This application claims priority under 35 USC §119(e) to U.S. Provisional Patent Application Serial No. 63/514,040 filed on July 17, 2023.

TECHNICAL FIELD

This specification relates to systems and methods for selecting a set of tasks and predicting outcomes of those tasks for greenhouse gas mitigation.

BACKGROUND

Greenhouse gas (GHG) emissions from various economic activities are contributing to climate change in the form of higher temperatures and ocean acidification, among other effects. For example, $CO_2$ emissions are definite and last for ~500 years in the atmosphere. Systems that encourage reduction in GHG emissions and sequestering GHGs to undo past emissions and the associated effects are under development. Changes in operations that reduce emissions or remove existing emissions from the atmosphere are called "mitigations."

Conventional carbon mitigation projects are rarely a perfect match for the liability incurred by GHG emissions. This is because unlike emissions, which are definite and long-duration, mitigation projects may fail to mitigate or fail to maintain mitigation permanence for various reasons, such as forest fire, poor project management, and lack of additionality.

US 2002/138318 A1 discloses an integrated project management and risk management system. A risk processor has access to a project data store containing a plurality of inter-related project actions used for project management purposes, and a risk data store which contains a plurality of inter-related project activities and associated risk indicators used for related risk management purposes. The risk processor is operable to generate and write to the risk data store changes to the project activities and risk indicators reflecting changes in the project actions, to generate or receive mitigating activities identified to reduce or prevent a risk or the consequences of a risk associated with a project activity and to write corresponding project action changes to the project data store US2012290104A1 and US2022391921A1 are further prior art.

SUMMARY

The matter for protection is defined by the claims.

This specification describes systems and methods for selecting tasks, e.g., actions to be taken, as part of a set of tasks for greenhouse gas mitigation. The sets of tasks are dynamically updated depending on real-time data. For example, changes over time in the availability of project opportunities, societal demand for carbon mitigation, and market value of GHG offset credits, e.g., carbon offset credits, can affect task selection. The systems and methods can generate unique solutions for multiple sets such that no two sets of tasks necessarily have the same set of multi-year solutions and design high quality sets of tasks for distinct, future scenarios (e.g., climate change, economics, and fires rates). The system can include one or more machine-learning (ML) models trained and reinforced on a large dynamic data set including a diversity of data sources and data types. The data set can be generated and updated in real-time to maintain a dynamic predictive outcome of the set, e.g., to maximize a portfolio's carbon mitigation, reflecting past events and possible futures. The methods and system being dynamic refers, in part, to how updating the set of tasks is proactive, e.g., updating the set of tasks based on future predictions.

The trained ML model can be used to learn high-quality task selection to achieve long-term mitigation goals that are resilient to scenarios where mitigation storage fails (permanence failures). The trained ML model can be used to generate non-intuitive predictions including failure/risk correlations of GHG mitigation tasks which can refine a set by, for example, (i) ranking tasks based on predicted rates of failure, (ii) predicting GHG offset potential, (iii) correlation of risk in current tasks included in a dynamic set, and (iv) balancing the time when a task starts against its efficiency (earlier starts mitigate more emissions but by delaying by a few years may enable the use of new technologies, e.g., more reliable and/or cheaper technologies).

The subject matter described in this specification as implemented in particular embodiments realizes one or more of the following technical advantages. The system includes a dynamic predictive feedback loop using data obtained from multiple resources (e.g., having different sources and different formats) to maintain and update an outcome prediction of a set of tasks. The large data set generated from the multiple different sources and having different formats can be used to train a ML model to generate predictions related to, for example, diversification between tasks in a set, individual and group task risk/failure mechanisms, and retroactive long-term GHG mitigation effectiveness. A ML model, can be trained and reinforced on this dynamic, real-time data set to generate non-intuitive predictions related to failure mechanisms of the tasks in a set, e.g., determining which failure mechanisms lead to failure, which failure mechanisms lead to which types of failures, which tasks are likely to fail together or independently, and the like. The model can be used to update a dynamic set of tasks in response to real-time changes, e.g., to repair the set by adding/removing projects, to maintain a substantially diversified (e.g., low correlation values) of the tasks in the set while achieving target GHG mitigation goals and improve the quality of tasks within the set by predicting more effective ways to manage the tasks, e.g., reduce cost, improve reliability, or reduce failure correlation with other tasks. The system can, via generating instructions, share these ways to manage tasks with project performers. Developed understanding of how failures of individual tasks affect other (seemingly) unrelated tasks can be used to offset potential failures and keep an agile set. For example, the model can be used to assess, in real-time, potential failure mechanisms, degrees of failure for the potential failure mechanism (e.g., a degree to which the GHG mitigation is reversed), evaluate and rank potential candidate replacement task to repair failures, and select, based on the ranking, replacement candidate task(s). The infrastructure can be used to provide unique solutions for each set, where no two sets need to have the same set of tasks over a multi-year, predictive risk set. For example, some constraints on the set can include the tasks being in US and having a 96% probability of maintaining 1G tons $CO_2$ mitigated in 2030 over the subsequent 10 year time period.

The systems and methods can be used to achieve permanence from potentially impermanent tasks by implementing permanence actions supportive of a set of GHG mitigation tasks, e.g., an additional action that returns the permanence of a set of tasks through a "permanence action." Permanence actions can include supportive solutions that can reduce failure probabilities of particular GHG mitigation tasks and/or reduce an impact of failures of the GHG mitigation sets by implementing solutions having lower risk/unpredictable outcome. For example, a permanence action includes obtaining futures on carbon dioxide removal (CDR) that can be executed to mitigate risks of impermanence of nature-based solutions in a GHG mitigation set. For example, a mitigation project can fail by releasing stored $CO_2$ (e.g., as a result of a forest fire), and obtaining futures on CDR can compensate by recapturing carbon in the same year.

In another example, a permanence action includes incentivizing and building an ecosystem to use environmentally-friendly options supportive of GHG mitigation tasks (e.g., use of sustainable construction materials) included in a GHG mitigation set, thereby converting impermanent nature-based solutions into permanent solutions, e.g., creating supply/demand to use mass timber as a steel replacement. The system can synthesize multiple streams of data for individual projects that are each entering/exiting at different times, having different ramp times for GHG mitigation, and different magnitudes of GHG mitigation. The system can generate sets that achieve any given level of GHG mitigation and reduction of global temperatures with any given probability, employing the appropriate levels of task redundancy to achieve these targets (e.g., increase a redundancy of tasks needed if emission targets are more stringent or the individual projects are more correlated or less individually reliable).

In some implementations, the permanence action can support a set of liabilities (e.g., a set of two or more GHG tasks), where the permanence action is supportive to reduce failure probabilities and/or reduce the impact of the set of GHG mitigation tasks, e.g., replacing concrete and steel with less GHG-intensive materials. A set of GHG tasks can be grouped together and a permanence action is generated to support the grouped set of GHG mitigation tasks. For example, the permanence action can be storing fully-grown trees from a forest in a mass timber building so that the growth gains are kept stable and the land where the trees were cut can be used to grow new trees. As other examples, the permanence action can include risk diversification or an insurance policy specialized for key failure modes in the set of tasks.

In some implementations, the permanence action is supportive of one or more GHG mitigation tasks for a period of time. For example, the permanence action can support a failure or impermanence of one or more GHG mitigation tasks for a period of 5 years, 10 years, 15 years, or more. In another example, a permanence action can be supportive of short-term failures/impermanence, e.g., less than 5 years, less than 2 years, less than 1 year, or less.

In some implementations, a permanence action can be pre-arranged (e.g., pre-purchased) and held in reserve to counteract an impermanence and/or failure of one or more GHG mitigation tasks. The permanence action can be applied as needed, e.g., in case of a determined or anticipated failure, to mitigate an observed or expected loss. At times, the need for permanence actions can be evaluated to recoup failing GHG offsets on a periodic basis, where the need for permanence actions can be evaluated periodically (e.g., a year, 2 years, etc.) where if these GHG offsets appear to be failing, that permanence actions are implemented to correct for losses.

The details of one or more embodiments of the subject matter of this specification are set forth in the accompanying drawings and the description below. Other features, aspects, and advantages of the subject matter will become apparent from the description, the drawings, and the claims.

In a general aspect, a method for updating a set of tasks includes: generating a set of tasks; determining, by a machine learning model and based on multiple data types from a plurality of sources, that an overall risk score of the set exceeds a first failure threshold due to a risk score of a task exceeding a second threshold; selecting a replacement task for the task, the selecting including: receiving, a plurality of replacement candidates, each replacement candidate including a candidate offset potential and one or more candidate failure mechanisms; assigning, by the machine learning model and to each of the plurality of replacement candidates, a replacement score for the replacement candidate based on a failure correlation of the replacement candidate with respect to each other sets of the set of tasks; ranking the plurality of replacement candidates based on the replacement scores; and selecting, based on the ranking, the replacement task; and generating, an updated set of tasks including the replacement task. Each task can include an offset potential and one or more failure mechanisms, and the set can include a metric.

In some implementations, assigning the replacement score for the replacement candidate based on failure correlation includes assigning the replacement score based on (i) predictive rates of failure and (ii) a predicted offset potential.

In some implementations, ranking the plurality of replacement candidates based on the replacement scores further includes: determining, for the task of the set of tasks exceeding the failure threshold, a mitigation failure value; and ranking the replacement candidates based on respective potential of each candidate replacement project to repair the mitigation failure value.

In some implementations, ranking the plurality of replacement candidates further includes ranking the replacement candidates based on real-time data collected from similar mitigation projects.

In some implementations, determining, by the machine learning model and based on multiple data types from the plurality of sources, that the task of the set of tasks exceeds the failure threshold for the one or more failure mechanisms includes: predicting, by the machine learning model and based on real-time data collected for the task based on the multiple data types from the plurality of sources, that future variations of a mitigation for the task are below a threshold mitigation.

In some implementations, the method further includes: determining, by the machine learning model and for a failure scenario, an impact on mitigation outcomes for respective failure mechanisms of each of the tasks of the set; predicting, based on aggregated impacts across all the tasks of the set, a total impact of the scenario on the set of tasks; and using the total impact, determining the overall risk score.

In some implementations, the method further includes: receiving training data, from the plurality of sources and including multiple data types, data representative of a plurality of tasks; and providing, to the machine learning model, the training data. The training data representative of each task can include (i) rates of failure, (ii) offset results, e.g., mitigation task operating history and status, (iii) correlation strength to one or more other tasks.

In some implementations, providing the training data includes updating the training data using a transfer learning machine learning model, and training the machine learning model includes using the updated training data to train the machine learning model.

In some implementations, the transfer learning machine learning model is configured to: based on an image associated with one of the tasks, determine a set of simulation parameters for a simulation simulating the one of the tasks; and provide the set of simulation parameters as a portion of the training data to a machine learning model.

In some implementations, the method further includes: determining, for one or more of the tasks of the set of tasks, a permanence action supportive of the task, the permanence action counteracting at least one of the one or more failure mechanisms; and generating, the updated set of tasks including the permanence action.

In some implementations, the method further includes determining that the selected replacement task has a first failure mechanism. The permanence action can have a second failure mechanism different from the first failure mechanism.

In some implementations, the permanence action includes generating, in a market ecosystem, an incentive supportive of one or more of the tasks. The incentive reduces a probability of the at least one of the one or more failure mechanisms.

In some implementations, determining the permanence action includes: determining, for a set of two or more tasks of the set, that the permanence action counteracts the respective failure mechanisms of the set of two or more tasks.

In some implementations, determining the permanence action includes determining that the permanence action is supportive of the task for a period of time. The permanence action supportive of the task is an investment of a carbon credit, carbon offset, or a combination thereof, for a period of at least 5 years

In some implementations, the method further includes: receiving new input data including data indicating at least one of the offset potential, the failure mechanism, and the risk score of an associated task is incorrect; determining updated values for the at least one of the offset potential, the failure mechanism, and the risk score of the associated task that is indicated to be incorrect; and updating the set with the updated values for the at least one of the offset potential, the failure mechanism, and the risk score of the associated task that is indicated to be incorrect.

In some implementations, the method further includes: in response to updating the set with the updated values, determining that the overall risk of the set exceeds the failure threshold; and in response to determining that the overall risk of the set exceeds the failure threshold, selecting another replacement task for the set.

In some implementations, the new input data includes data regarding ecological conditions related to the failure mechanisms associated with respective tasks.

In some implementations, the method further includes: receiving measurements indicating progress of the set of tasks, the receiving including: receiving, from a sensor, data indicative of an ecological condition, and using the data indicative of the ecological condition as input data, executing a simulation to provide output data, and comparing the measurements to the metric; and in response to the comparison between the measurements and the metric, determining to select another replacement task. Comparing the measurements of the metric can include using the output data.

## BRIEF DESCRIPTION OF THE DRAWINGS

FIG. 1A shows a system for generating a set of tasks.

FIG. 1B depicts an example of the ML model that is trained to generate and manage a set of tasks.

FIG. 1C depicts a training system for specialized models within the ML model of FIG. 1A.

FIG. 1D shows an example of generating input data for the system of FIG. 1A.

FIGS. 1E and 1F depict phases of the ML model generating training data 150.

FIG. 1G shows both gradient-based and gradient-free methods for optimizing a neural network.

FIG. 2A shows a flowchart for a process of generating a set of tasks for GHG mitigation. FIG. 2B shows a flowchart for a step within the flowchart of FIG. 2A.

FIGS. 3A and 3B are example plots of the baseline emissions of GHG projects.

FIGS. 4A and 4B are example plots of mitigated emissions for GHG projects.

FIG. 5 is an example plot of mitigated emissions for a set of GHG projects.

FIG. 6 is an example plot of a GHG mitigation set.

FIG. 7 is a block diagram of an example generic computing system.

Like reference numbers and designations in the various drawings indicate like elements.

## DETAILED DESCRIPTION

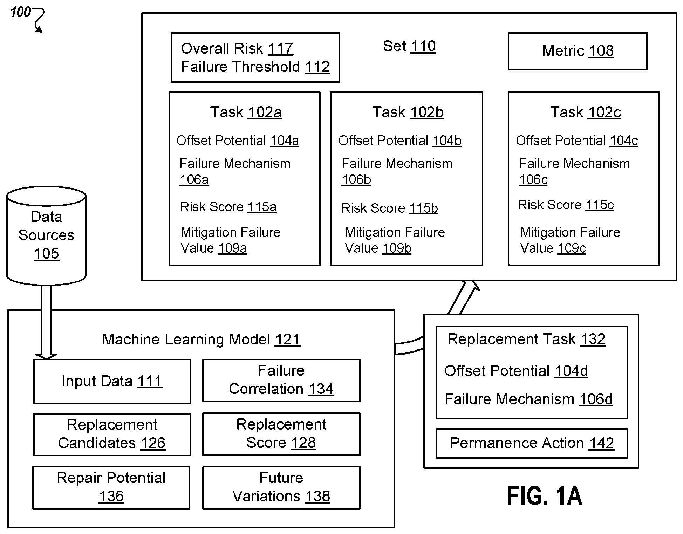

FIG. 1A depicts a system 100 for generating a set 110 of tasks 102 for GHG mitigation. For example, the set 110, e.g., also referred to herein as a "portfolio," includes tasks 102a, 102b, and 102c. The ML model 121 selects the tasks 102 to generate the set 110. Depending on different parameters of the set 110, the ML model 121 can also select replacement tasks 132 and permanence actions 142 for the set 110.

The tasks 102 can correspond to projects, e.g., actionable items, that will result in GHG mitigation. Each task 102 has an associated offset potential, e.g., offset potentials 104a, 104b, and 104c for tasks 102a, 102b, and 102c, respectively. The offset potential 104 is a measure of the possible GHG mitigation. The mitigation is defined by (a) an amount of GHG reduction (b) a timeframe over which the reduction is achieved, and (c) a guaranteed time frame for which the mitigation has permanence e.g., a reduction of 500-1000 tons of carbon dioxide each year for five years.

Each task 102 has an associated failure mechanism, e.g., failure mechanisms 106a, 106b, and 106c for tasks 102a, 102b, and 102c, respectively. For example, task 102a can be planting a forest, which has failure mechanisms 106a, such as forest fires and drought. Each task 102 has a risk score 115 associated with the failure mechanisms 106. For example, the risk score 115 can be a measure of how likely the failure mechanisms 106 are to cause the task 102 to not reach the offset potential 104.

In some implementations, determining the risk score 115 includes simulating possible sequences of events, e.g., modeling possible sequences of fire maps and simulating the effect of fire events according to the fire maps in any task 102 in the set 110. Using the output of the simulations, e.g., the quantification of the risk that each task 102 will not achieve a target GHG mitigation, the system 100 generates a probability distribution, e.g., a distribution of overall risk scores 117, that a given portfolio will mitigate a target amount of GHG. Computed this way, the overall risk score 117 is the amount of mitigation that is predicted to occur at a high confidence level, considering the full set of sampled simulated mitigation outcomes. For example, a set 110 having a risk score of 1% indicates that the set 110 provided at least the target amount of GHG mitigation in 99% of the simulation results. In some implementations, the individual risk scores 115 measure a correlation between mitigation values of an individual task 102 relative to the remaining tasks in a set. As will be discussed in relation to replacement tasks 132, upon detecting that a particular task 102 exceeds a failure threshold for individual tasks, the ML model 121 can determine an associated mitigation failure value 109, e.g., mitigation failure value 109a, 109b, and 109c for tasks 102a, 102b, and 102c, respectively.

The ML model 121 selects tasks 102 to construct a set 110 depending on a metric 108 and failure threshold 112 of the set 110. In some implementations, the metric 108 is user-provided, and in other implementations, the metric 108 is determined by the ML model 121. For example, the metric 108 can be a long-term GHG mitigation goal, such as reducing carbon emissions from industrial processes by 1000 tons a year for 20 years. The failure threshold 112 is a measure of the likelihood of success of the tasks 102 satisfying the metric 108, e.g., achieving the long-term GHG mitigation goal. For example, a strict failure threshold 112 could be a 90% chance of success, while a less strict failure threshold 112 could be a 50% chance of success.

The overall risk 117 of the set 110 depends on the individual risk scores 115 of each task 102 and how similar the failure mechanisms 106 of the various tasks 102 are. For example, a set 110 can satisfy the failure threshold 112 when an individual task 102a has a high risk score 115a as long as the remaining tasks 102b and 102c respectively have sufficiently low risk scores 115b and 115c, e.g., 1% or lower. Additionally, if the failure of one task is correlated with the failure of another task, e.g., tasks 102a and 102b are both nature-based solutions that rely on soil conditions, the overall risk 117 of the set 110 is higher than if the failure of tasks are uncorrelated with each other.

The ML model 121 receives input data 111 from various data sources 105 as input and generates the set 110 as output. The ML model 121 can be trained using training data that comes from various data sources related to the tasks 102, e.g., rates of failure, offset results, and correlation strength to other tasks 102.

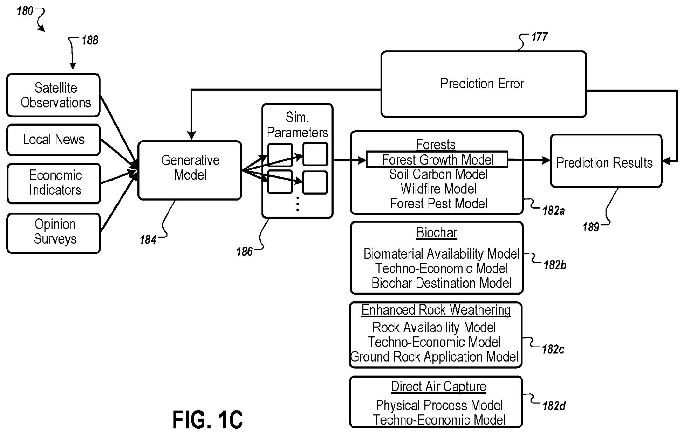

The data sources 105 can include real-world records of GHG emissions and sequestering associated with different types of tasks, simulation results of GHG emissions and sequestering associated with the different types of tasks, measurements of ecological conditions such as ocean temperature and acidity, financial records, satellite imagery, news stories, and so on. As will be discussed further in relation to FIG. 1C, using this input data 111, the ML model 121 can predict the offset potential 104, failure mechanism 106, and risk score 115 of each task 102. The ML model 121 selects a set 110 of tasks 102 that together satisfy the metric 108 and failure threshold 112, e.g., selects tasks 102 with sufficiently uncorrelated failure mechanisms that together achieve a long-term GHG mitigation goal.

The offset potential 104 can depend on when a task is started, e.g., the overall GHG mitigation or warming avoided by a task can generally increase the earlier the task begins. For example, global warming due to GHGs can be a positive feedback loop, with air holding more water vapor (an example of a GHG) being able to absorb more heat. As another example, each year that $CO_2$ is in the air, the $CO_2$ increases the global temperatures and causes additional environmental damage. Thus, each additional year that $CO_2$ is removed avoids the same heating and damages. So the earlier a task 102 is performed, the higher the offset potential 104 of the task 102 is.

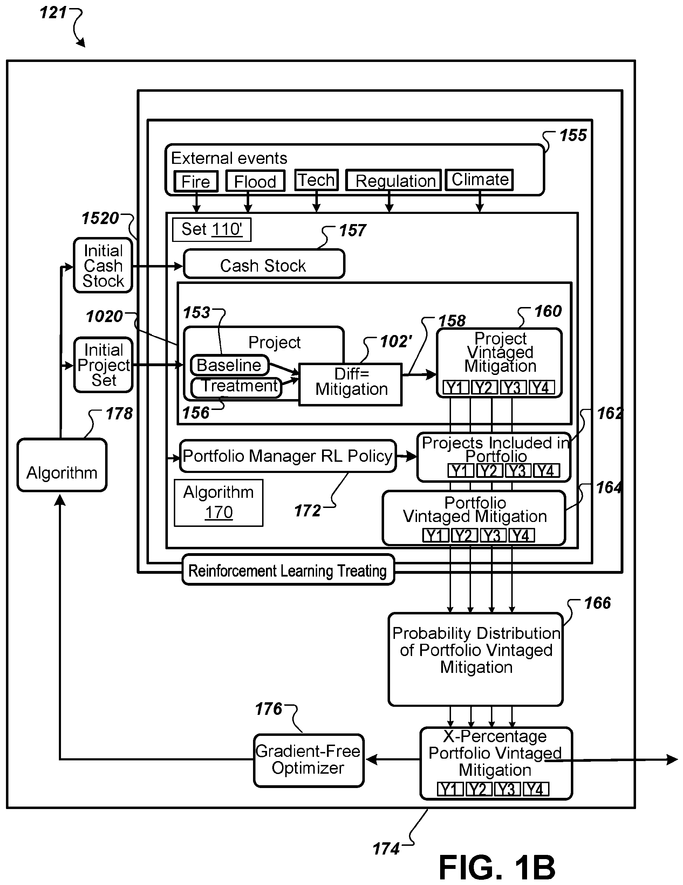

FIG. 1B depicts an example of the ML model 121, which is trained to generate and manage the set 110 of tasks 102, as well as predict how the mitigation outcome of the set compared to the metric 108. The training at the ML model 121 for selecting tasks uses a feedback loop, using the predicted mitigation of an example set 110'.

In this example, example set 110' includes a cash stock 157 and a projected collection of available projects 102'. External events 155, such as fires, floods, innovations in technology, regulation, and climate, can affect the projected collection of available projects 102'. Before training, an initial project set 1020 and initial cash stock 1520 determines what the initial values for the projected population of available projects 102' and the cash stock 157 are. Each project 102' has an associated baseline 153 level of GHG emissions and a treatment 156 level of emissions. The difference between the baseline 153 and the treatment 156 is the mitigation 158. Depending on the year of the mitigation, the ML model 121 can calculate a project vintaged mitigation 160 from different years, e.g., a time series of how much mitigation occurs in years Y1, Y2, Y3, Y4 and so on. Aggregating over the years in the project vintaged mitigation 160, the ML model 121 determines which projects should be included in the set 162 to reach a mitigation goal, which in turn yields the portfolio vintaged mitigation 164 for the set 162. Further, the system 100 can determine how long the mitigation remains secure, as the effectiveness of some projects can degrade over time.

Using a reward function, the ML model 121 uses reinforcement learning training to generate an algorithm 170, which is used to determine the portfolio reinforcement learning algorithm 172, which manages the portfolio by determining decisions relating to project inclusion, exclusion, and modification. The projects included in the set 162, the portfolio vintaged mitigation 164, the algorithm 170, and the portfolio reinforcement learning algorithm 172 form a feedback loop to maximize reward, e.g., minimize the loss function, representing determining a set 110 with a target risk score.

The system 100 evaluates the period of the portfolio vintaged mitigation 164 to determine the probability distribution of the portfolio vintaged mitigation 166, which is used to determine the X-percentile portfolio vintaged mitigation 174. Using the X-percentile portfolio vintaged mitigation 174, the ML model can predict mitigation, e.g., the GHG impacts, with X-percentile confidence.

The ML model 121 uses a gradient-free optimizer 176 to determine an algorithm 178 for selecting projects 102' in the set 110', e.g., portfolio configuration. This algorithm 178 provides parameters, e.g., simulation parameters for a model predicting carbon capture by a forest, for the initial project set 1020 and the initial cash stock 1520. This process is repeated until the algorithm 178 satisfies some optimization criteria, e.g., has a certain degree of accuracy with predictions compared to ground truth data.

The ML model 121 includes specialized models for evaluating the offset potential 104 of each type of task, e.g., actionable item. With reference to FIG. 1C, a training system 180 for the specialized models 182 for predicting the offset potential 104, e.g., specialized models 182a for forests, specialized models 182b for biochar, specialized models 182c for enhanced rock weathering, and specialized models 182d for direct air capture. For example, specialized models 182a can include forest growth models, soil carbon models, wildfire models, and forest pest control models. Specialized models 182b can include biomaterial availability models, techno-economic models, and biochar destination models. Specialized models 182c can include rock availability models, techno-economic models, and ground rock application models. Specialized models 182d can include physical process models and techno-economic models.

In some implementations, instead of developing and running simulations for each of these scenarios, e.g., forests, biochar, etc., the system trains a generative model 184, e.g., a multimodal large language model. Training a generative model to determine the simulation parameters 186 for specialized model 182 can be much quicker and less resource intensive. In some implementations, the generative model can replace the specialized models. The input data 188 for the generative model 184 includes various types of files, including those with text, such as satellite observations, local news, economic indicators, and opinion surveys.

Once the simulation parameters 186 have been determined by the generative model 184, the specialized models 182 can predict results 189 with which there is historical data to compare. The prediction error 177, e.g., the difference between the predicted results 189 and the historical data, is provided to the generative model 184. If the prediction error 177 is too large, the generative model 184 will continue training until the prediction error 177 is sufficiently small.

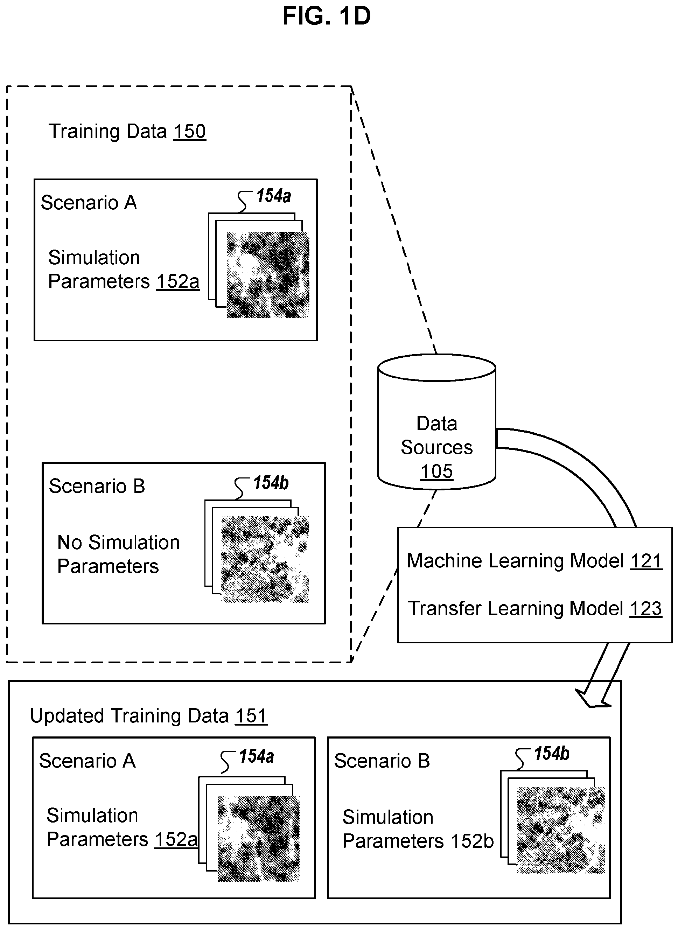

With reference to FIG. 1D, in some implementations, there can be insufficient training data 150 for a model of particular type of task 102. For example, parameters such as offset potential 104, failure mechanisms 106, and risk scores 115 can depend on output of ML models specialized for particular tasks and trained using simulations, e.g., scientific simulations modeling forest growth. The weights within these trained, specialized ML models are fine-tuned until the model replicates the results of the scientific simulations. In some implementations, to accurately predict parameters such as offset potential 104, the training data 150 for the ML model 121 should include simulation parameters 152, e.g., the fine-tuned weights from the specialized models, and images, such as satellite imagery 154.

In an example, the specialized model can be forest growth within a particular climate, the output of which is part of the data sources 105. The output of the forest growth model, e.g., canopy coverage, tree biomass, etc., is used as training data 150. A scenario A correspond to a first location, e.g., U.S. forests, and a scenario B correspond to a second location, e.g., African forests. Both scenarios A and B have corresponding satellite imagery 154a and 154b, but only scenario A has corresponding simulation parameters 152a. In other words, a specialized model has already been trained for the U.S. forests, the output of which can be used as a data source 105.

To address this issue, the ML model 121 can include a transfer learning model 123 in order to determine an accurate models specialized for African forests. The transfer learning model 123 is configured to determine, based on relationships between the simulation parameters 152a and the satellite imagery 154a, what simulation parameters 152b for the African forests would reproduce the satellite imagery 154b. For example, the transfer learning model 123 can be configured to create an inverse design tool that predicts simulation parameters 152 based on satellite imagery 154. Thus, the ML model 121 can generate updated training data 151. Alternatively, when the transfer learning model 123 replaces the specialized models, the system 100 can skip generating the updated training data 151 and use simulation results of the transfer learning model 123. Advantageously, using the transfer learning model 123 can improve accuracy for predictions relating to tasks 102 with relatively little input data.

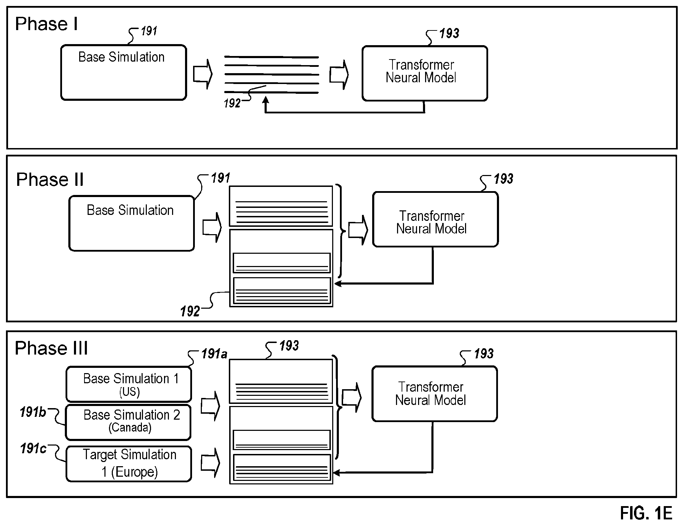

FIGS. 1E and 1F provide more detail of how the ML model 121 generates training data 150 through various phases. Phase I corresponds to training the specialized model to reproduce results of the simulation in scenarios where there is plentiful training data. For example, a base simulation 191, e.g., a scientific simulation of forest growth, produces accurate results in a limited domain, e.g., forest growth in the Pacific Northwest of the US. Traces 192 of the output data from base simulation 191 provide a comprehensive sample input for a transformer neural model 193. The transformer neural model 193 is validated when predicting the same traces as the traces 192 output by the base simulation 191. For example, the transformer neural model 193 is trained on runs of forest simulations for US forests. The transformer neural model 193 is considered validated for the transformer neural model 193 and can approximate the simulation's output on more runs of the US forests, e.g., a different year but the same forest.

Phase II corresponds to training a specialized model using a similar model. For example, Phase II can correspond to training the transformer neural model 193 on runs of forest simulations for Northeast US forests and a few samples of Alabama forest, where the specialized model is intended to predict results for Alabama forests. In this case, training data for the transformer neural model includes various types of traces 192, e.g., traces for the input subspace, e.g., Northeast US forests, traces for the target subspace, e.g., Alabama forests, as well as the larger validation set. In this case, the predictions for the target subspace, e.g., Alabama forests, are used to validate the transformer neural model 193.

By following Phase II, models can be generalized and/or transferred to make accurate predictions and regions without sufficient training data. This process can be further generalized in Phase III, where there are multiple base simulations 191. In this example, the target simulation is European forests, where there are pre-existing base simulations 191a and 191b, respectively, for the US and Canada. In this case, the transformer neural model 193 is trained on runs, e.g., thereby providing traces 192, of forest simulations for the US and Canada using the pre-existing simulations results, as well as a few examples of runs from the European simulator. The predictions of the transformer neural model 193 for the target simulation, e.g., European forest simulations 191c, can be used to validate the transformer neural model 193.

Phase IV corresponds to refining a specialized model using collected measurements, e.g., physical measurements, as well as simulation results. In Part A, both physical measurements 194 and traces 192, e.g., output results of a base simulator 191, e.g., for a US forest, are used to train the transformer neural model 193. The physical measurements 194 can be categorized into different type of data, such as satellite images, news and social media, and chemical samples. For example, the system 100 can extract physical measurements 194 from different data types, e.g., reports of staffing problems at local firefighting squads, reports of anticipated changes in interest rates that may make biochar tasks more or less profitable, records of roads that may block the propagation of fires or pests, and tables of chemical properties of biochar reactor input and output materials. The transformer neural model 193 can be used to predict other instances, e.g., different initial conditions, for the same use case, e.g., US forests.

In Part B, more traces for base simulations and more physical measurements of the simulated systems can be used to fine-tune the transformer neural model 193 to predict simulation traces from physical measurements. An optional refinement step includes reducing the quality/coverage of the physical measurement data to mimic real-world data quality issues, which can ensure that the transformer neural model 193 is resilient to low-quality, real-world data.

In Part C, physical measurements 194' of different domains, e.g., African forests, are used to fine-tune a surrogate neural network 193' to predict corresponding simulation traces for African forests. This is useful in a situation where there are no available simulation results of the domain of the target simulation, e.g., African forests. The predicted simulation traces 192' of these African forests can then be used as training data 150.

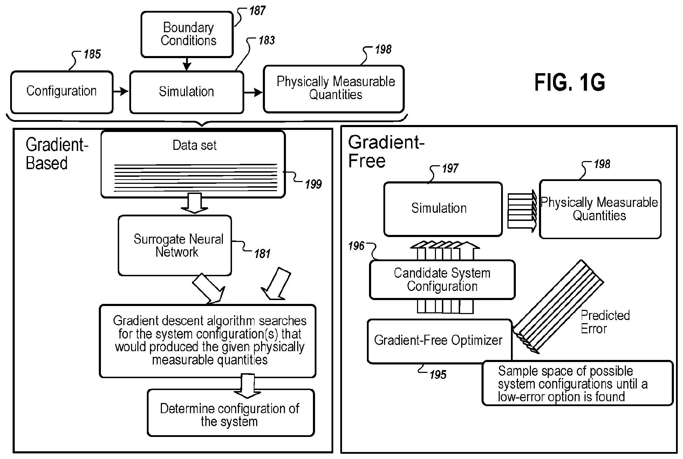

In some implementations, an advantage to using specialized, ML models in place of scientific simulations for the training data 150 is improved accuracy. For example, during training, a ML model can use different methods for finding local minimums in the loss function. With reference to FIG. 1G, accurate methods, such as gradient descent algorithms can generally be used in machine learning applications, but not necessarily for a generic simulation, e.g., a simulation that runs on Fortran code.

In a gradient-free scenario, a gradient free optimizer 195, e.g., a Bayesian optimizer, determines candidate system configurations 196. A simulation 197 accepts the candidate system configurations 196 as input and outputs predicted observations, which are physically measurable quantities 198. Using the physically measurable quantities 198, prediction error can be determined, and the gradient free optimizer will continue sampling the space of possible system configurations until a low error option is found.

In contrast, in a gradient-based scenario, a data set 199 of example simulation runs with configurations, boundary conditions, and observations is provided as input to a surrogate neural network 181. The data set 199 is generated by a simulation 183. The configuration 185 of the system, e.g., the state of a forest, is unobserved, while the boundary conditions 187, e.g., populations of beetle infestations, are potentially unobserved. Using the configuration 185 and boundary conditions 187 as input, the simulation 183 predicts physically measurable quantities 198, such as a satellite view of a forest and soil carbon levels. All of the configuration 185, boundary conditions 187, and physically measurable quantities 198 are part of the data set 199.

While training the surrogate neural network 181, a gradient of the surrogate approximates the gradient of the simulation, e.g., the gradient of the surrogate is approximately the same as the gradient of the simulation. A gradient descent algorithm searches for system configurations 185 that would have been produced given the physically measurable quantities 198. By finding these configurations 185, the surrogate neural network 181 can infer an unknown configuration of the system, e.g., simulation parameters for African forests.

Failure scenarios, e.g., a task 102 failing to be completely performed, can occur. In some implementations, the ML model 121 can perform simulations of failure scenarios, e.g., a task 102 failing, to estimate an impact on mitigation outcomes for different failure mechanisms 106. For example, a failure scenario can correspond to a global shortage of a sustainably-made material, such as concrete. The ML model 121 can predict, using aggregate impacts of the global shortage of concrete to the various tasks 102 based on the failure mechanisms 106, a total impact of the failure scenario. The ML model 121 can use this total impact to predict? The overall risk score 117.

The ML model 121 can react to real events to update the set 110. The data sources 105 can also include real-time data provided as input data 111 to the ML model 121 after the generation of a set 110. For example, the ML model 121 can generate a set 110, which includes a task 102 of constructing buildings with sustainably-sourced timber, in the year 2024. After a wildfire in the year 2025, sustainably-sourced timber can become scarce, making the task 102 no longer tenable. As another example, new input data 111 from measurements of the success of a new GHG mitigation technique associated with a task can reveal that the technique was less successful than forecasted. The ML model 121 can monitor new input data 111, e.g., especially for conditions that increase risk of failure, and update the associated offset potential 104, failure mechanisms 106, and risk scores 115 based on the new input data 111.

As a result, the overall risk score 117 of a set 110 can go from satisfying the failure threshold 112 to not satisfying the failure threshold 112. In some implementations, the overall risk 117 can exceed failure threshold 112 due to a particular task 102. When a set 110 no longer satisfies the failure threshold 112, the ML model 121 can select a replacement task 132 for the particular task 102 that is causing the overall risk 117 to exceed the failure threshold 112.

Selecting the replacement task 132 can involve calculating various parameters associated with different replacement candidates 126. Each replacement candidate 126 corresponds to a task, e.g., an actionable item for GHG mitigation, which has associated offset potentials, failure mechanisms, and risk scores. Additionally, each replacement candidate 126 has associated failure correlation 134 and repair potential 136 in relation to the tasks 102 in the set that are not being replaced. For example, when task 102a has a risk score 115a that causes the overall risk 117 to exceed a failure threshold 112, the ML model 121 selects a replacement task 132 that depends on the remaining tasks 102b and 102c. The repair potential 136 measures how much the offset potential of given replacement candidate 126 will change the overall risk 117, and the failure correlation 134 is a measure of how related the failure mechanism of the given replacement candidate 126 is related to the failure mechanisms 106b and 106c.

In some implementations, the replacement candidates 126 can have time-varying repair potentials 136 and failure correlations 134. The ML model 121 can determine future variations 138 on the offset potentials 104, failure mechanisms 106, and risk scores 115 of the tasks 102 for an associated replacement candidate 126. In some implementations, the ML model 121 can select replacement candidates 126 based on the future variations 138, e.g., stable value correlations 134 and repair potentials 136.

The ML model 121 selects the replacement task 132 based on a ranking of the replacement candidates 126 based on the replacement scores 128. The replacement scores 128 can depend on values of the failure correlation 134, repair potential 136, and future variations 138. For example, the replacement score 128 can depend on predicted rates of failure related to the failure correlation 134 and risk score 115 of a replacement candidate 126 and a predicted offset potential 104 of a replacement candidate 126.

As an example, the ranking can be the replacement candidates 126 in ascending/descending order of a weighted average of the failure correlation 134, repair potential 136, and future variations 138. The particular weights for each ranking can be specific to the ML model 121 and be finely-tuned depending on the application. For example, the system 100 can determine that the ranking depends more on failure correlation 134 for sets 110 including only nature-based tasks in the set, e.g., the weights relating to the failure correlation 134 are greater.

As another example, the system 100 can determine that the ranking depends more on failure correlation 134 for sets 110 that include tasks where there is relatively little corresponding data. For example, set 110 including a task 102 involving a new carbon sequestration technique can have relatively little data. In this case, the system 100 can determine that weights relating to the failure correlation 134 are greater.

For any task 102, mitigation failure, e.g., variation in mitigation and failure to maintain mitigation permanence, is possible. For example, variation of mitigation can occur for a task that has unreliable GHG reduction, e.g., using windfarms in place of fossil fuels when there are sufficient meteorological conditions to sustain windfarms. Mitigation impermanence can occur when a type of task degrades in GHG reduction over time, e.g., a site for absorbing carbon dioxide becomes saturated or releases previously stored GHGs into the atmosphere. A mitigation failure value 109 quantifies the risk of mitigation failure, with each task 102 having an associated mitigation failure value 109, e.g., mitigation failure value 109a, 109b, and 109c for tasks 102a, 102b, and 102c, respectively.

To address the impermanence, e.g., generally decreasing variation, of a set 110, the ML model 121 can, in addition to a replacement task 132, select a permanence action 142. Selection of the permanence action 142 can depend on the mitigation failure values 109b and 109b of the unreplaced tasks 102b and 102c and the repair potential 136 of the replacement task 132. For example, selection of the permanence action 142 can depend on determining, for the remaining tasks 102 in the set 110, which permanence action 142 counteracts the failure mechanisms 106 of the remaining tasks 102.

In some implementations, the permanence action 142 is time-dependent. For example, a permanence action 142 can be "permanent" for a limited amount of time, e.g., 1, 5, or 10 years. When the ML model 121 is determining which permanence action 142 to select, the selection can depend on the period of time for which the permanence action 142 meets a threshold confidence of permanence. For example, the permanence action can be an investment of a carbon credit, a carbon offset, or both for a period of at least five years.

After the ML model 121 selects a replacement task 132 to replace the task 102a, the ML model 121 can calculate whether the updated set 110 satisfies the metric 108, e.g., the GHG reduction goal. If the metric 108 is satisfied by the new set 110, the ML model 121 can cease operations related to selecting a replacement task 132. If the metric 108 is not satisfied by the new set 110, the ML model 121 can continue operations related to selecting another replacement task 132.

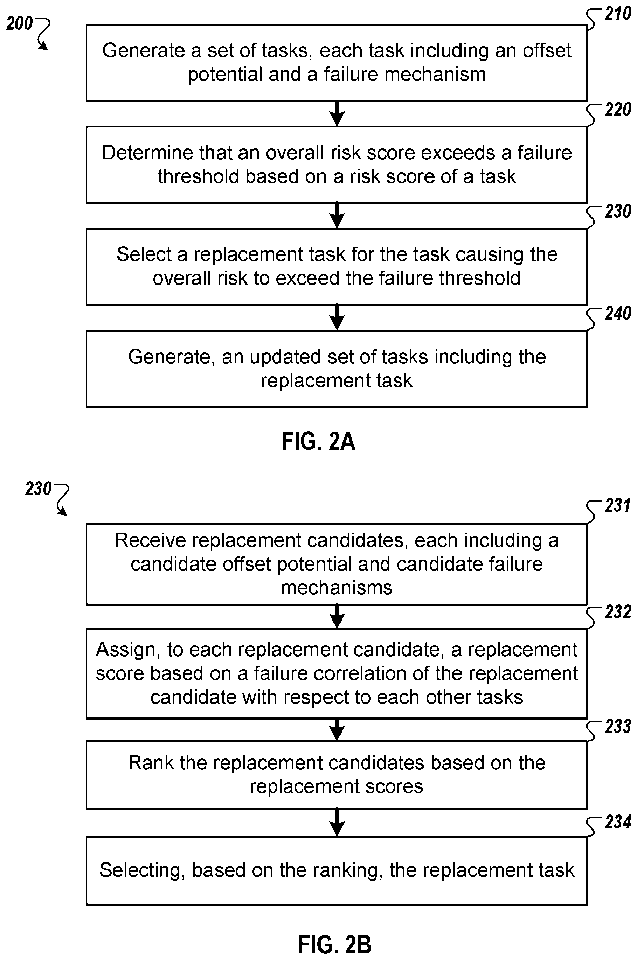

FIG. 2A depicts a flowchart for a process 200 for generating an updated set of tasks. The system 100 can perform the process 200.

The process 200 includes generating, e.g., by the ML model 121, a set 110 of tasks 102 with each task 102 including an offset potential 104 and one or more failure mechanisms 106 (210). The set 110 has an associated metric 108, such as a long-term GHG mitigation goal, and an overall risk 117 determined by the individual tasks 102 and the relationship between the tasks 102.

The process 200 includes determining that the overall risk 117 for the set exceeds a failure threshold 112 (220), e.g., due to a risk score 115 of a particular task 102 being exceedingly high. For example, an individual task 102 can have a risk score 115 that exceeds a second failure threshold. In some implementations, the ML model 121 determines that two or more tasks 102 are responsible for the overall risk 117 exceeding the failure threshold 112.

In some implementations, the ML model 121 can continuously monitor new input data 111 to evaluate whether the overall risk 117 changes for a given set of tasks. For example, ongoing monitoring of a particular task can be used to collect data to infer details about an unobserved state of a task. For example, the concentration of carbon dioxide stored in soil can be a good indicator of carbon dioxide mitigation for a forest related task. However, measuring the concentration of carbon dioxide in soil can be challenging compared to taking satellite images. In some implementations, the machine learning model 121 includes specialized models, e.g., transfer learning models, for inferring carbon dioxide concentrations based on satellite imagery. In this way, the system 100 can use input data related to relevant "measurements," e.g., predictions of carbon dioxide concentration based on satellite imagery, to predict an overall risk 117 for an ongoing task.

In some implementations, determining that the overall risk 117 exceeds the failure threshold 112 includes predicting, by the ML model 121 future variations 138 of the mitigation for each task 102. If the future variations 138 include values for the risk score 115 or offset potential 104 that will cause the overall risk 117 to exceed the failure threshold 112, the ML model 121 can determine that the overall risk 117 exceeds the failure threshold 112.

The process 200 includes selecting a replacement task 132 for the task causing the overall risk to exceed the failure threshold 112 (230). As will be discussed in relation to FIG. 2B, step 230 can include various substeps. In some implementations, the ML model 121 selects two or more replacement tasks 132 for the task causing the overall risk 117 to exceed the failure threshold 112.

The process includes generating an updated set 110 of tasks including the replacement task 132 (240). If the updated overall risk 117 satisfies the failure threshold 112, the system 100 has successfully updated the set 110.

Although, in this example, task 102a is replaced with replacement task 132, in some implementations, a replacement task 132 may be added without removing task 102a. In some implementations, task 102a is removed without a replacement task. For example, ongoing measurements can indicate that the task is not reducing the concentration of GHG in the atmosphere (or potentially even increasing the concentration), and the system 100 can determine to remove this task 102 from the set, thereby avoiding associated costs of performing the task.

In some implementations, in addition to a replacement task 132, the updated set 110 can include a permanence action 142. The ML model 121 can select the permanence action 142 to directly counteract the failure mechanisms 106 of the set 110. For example, selection of the permanence action 142 can depend on future variations 138 in the offset potential of the replacement task 132 or mitigation failure values 109 of tasks remaining in the set.

In some implementations, the permanence action includes purchasing features on carbon dioxide removal (CDR). Purchasing the CDR futures can be in response to determining that the task 102 causing the overall risk 117 to exceed failure threshold 112 has an especially high risk score 115, e.g., exceeds another risk threshold. For example, if the task 102 is nature-based and prone to the effects of natural disasters, purchasing features on CDR can reduce the associated risk of failure, since the failure mechanisms 106 of CDF futures and the replacement task are different.

In some implementations, the permanence action includes generating, in a market ecosystem an incentive that supports the tasks 102. For example, the incentive can be introducing controlled burns in a forest, which reduces the likelihood of wildfires, which can be a failure mechanism of a task of planting a forest.

Referring to FIG. 2B, the process of selecting a replacement task 132 can vary. For example, the step 230 of selecting a replacement task 132 can include receiving replacement candidates 126, each replacement candidate 126 including a candidate offset potential and a candidate failure mechanism (231).

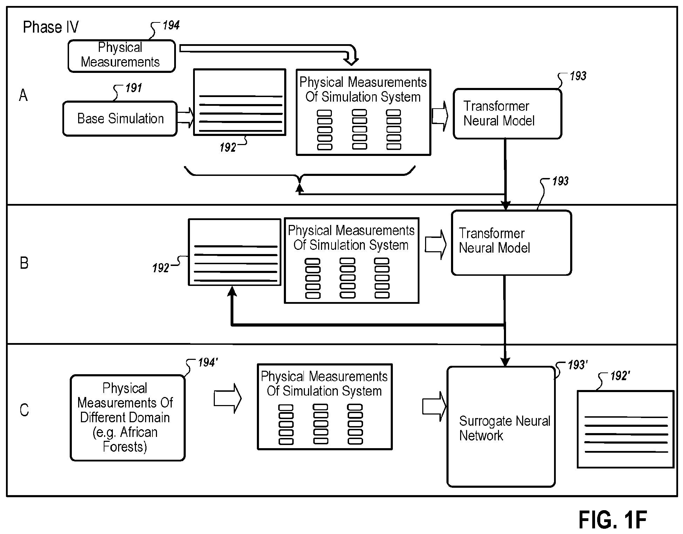

The ML model 121 can assign, to each replacement candidate 126, a replacement score 128 based on a failure correlation 134 of the replacement candidate with respect to the other tasks in the set, e.g., the tasks not causing the overall risk 117 to exceed the failure threshold 112 (232). As discussed with relation to FIG. 1, the replacement score 128 can also depend on future variations 138.

The ML model 121 can rank the replacement candidates 126 using the replacement scores 128 (233). For example, the ranking must be replacement scores 128, which are a weighted average of the failure correlation 134 and the repair potential 136.

In some implementations, ranking the replacement candidates 126 includes determining an associated mitigation failure value 109 of tasks within the set 110. In such cases, the ranking depends on a likelihood of each replacement candidate 126 to repair the mitigation failure value 109 of tasks within the set 110. For example, selecting a replacement task 132 of the replacement candidates 126 that has a strong permanence, e.g., the offset potential will not degrade over time, can repair the mitigation failure value 109.

As another example, determining the replacement score 128 for a particular replacement candidate 126 can depend on real-time data for tasks with similar failure mechanisms. For example, the ML model 121 can use new data reflecting the efficiency of forests absorbing carbon dioxide to determine the replacement score for replacement candidates 126 that include planting forests.

Then, the ML model 121 selects, based on the ranking, the replacement task 132 (234). The replacement task 132 replaces a task 102 in the set 110, e.g., a carbon capture task replaces a direct air capture task.

Examples of GHG Mitigation Projects

The following will provide specific examples of generating sets of various types of tasks to mitigate greenhouse gases (GHGs) relative to the current emissions profile (e.g., emit less than before or actively store previously-emitted GHGs). The system 100 generates a set 110 of tasks 102 that are packaged as warrantied carbon offsets, which are long-term (e.g., "forever") commitments that a fixed amount of GHG concentration that would have been in the ecosphere is permanently mitigated. The offsets are generated via continuous monitoring of each task's, e.g., project's, mitigations and using portfolio-based diversification and repair actions to ensure that the actions corresponding to the set 110 deliver a specific amount of GHG mitigation with a measured confidence even if individual projects may fail. Credits from providing these warrantied offsets can be leveraged on a marketplace (as well as credits from the project it invests in) to invest in and generate additional credits from transition investments.

GHG mitigation projects can take various forms and involve different types of mitigation, such that each GHG mitigation project can deliver unique incentives that may be customized depending, for example, on the end needs of the implementing party. Described below is an example GHG mitigation project involving regenerative agriculture.

The agricultural industry is critical for supporting society's need for food and biologically-based products. However, current agricultural practices can cause significant GHG emissions, for example, by extensive use of fertilizer, depletion of soil carbon and emissions from residues of harvested crops. Regenerative agriculture is a set of practices that improve the efficiency of farms to enable the farms to maintain and increase yields while reducing costs and the environmental impacts. These include no-till, cover crops, reduction in the use of fertilizer and pesticides, as well as adaptive grazing. While promising, these techniques can be challenging to adopt, and the transition presents a significant risk for farmers.

For example, the transition to regenerative agriculture can involve up-front costs in adopting the new techniques, some time periods of lower yields as the technique is adapted to the farm, and the risk that a given technique is not effective within the farm's local context. A farm that has transitioned to regenerative agriculture techniques continues operating as normal, growing and selling crops and incurring operating costs. Further, the farm may mitigate GHG emissions by reducing its own emissions or by storing atmospheric carbon in the soil or in the plants it grows. The stream of profits and mitigations can be forecast ahead of time and in reality, the farm may deviate from this prediction.

Failures of a regenerative agriculture project can include, for example, instances where the use of regenerative farming can incur high costs or does not produce adequate yields, shrinking its profits. As a result, the farm may resume more GHG intensive farming practices and fail to mitigate as much GHG emissions as expected. This lack of mitigation may be discovered quickly (e.g., measuring the dry weight of harvested plants) or several years later (e.g., via deep measurements of soil carbon). This may occur because crop yields are unexpectedly low or because the soil chemistry is discovered to be unsuitable for effective carbon sequestration. GHG mitigation that occurred in past years can be reversed, re-releasing GHGs back into the atmosphere. This may occur due to a natural event such as a flood or a fire, or because the farmer has abandoned a regenerative practice that was mitigating GHGs but was inhibiting the operation of the farm.

Modeling of a GHG Mitigation Project

The ML model 121 can model mitigation tasks as a stochastic time series, e.g., samples from the probability distribution of overall risk scores 117 and outputs a mitigation time series for each sample, of task operating costs and credit returns (a return on the cost of enacting a GHG mitigation task), as well as GHG mitigations. Described below are further details related to defining a GHG mitigation project, e.g., a task 102.

1. Credit Returns

The time series of a project's credit flows is based on its time series of costs and credit returns. Most projects are expected to collect no credit returns during the period of transition to sustainable operation and then over time become increasingly profitable as the operators gain experience and reach economies of scale.

2. Mitigation Claims

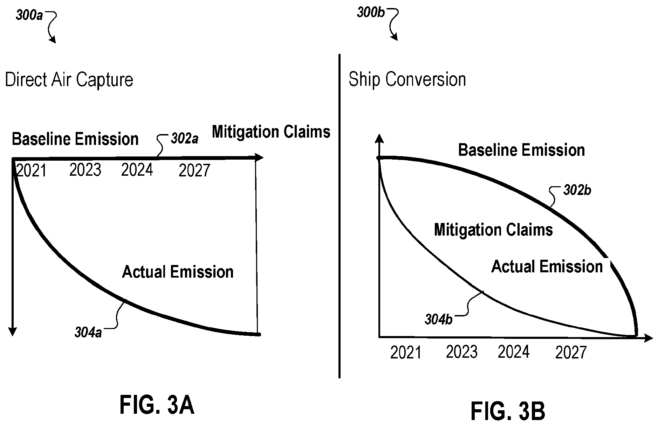

The time series of the amount of GHGs mitigated by the project is based on a time series of baseline and actual emissions. Baseline emissions is the amount of GHGs that would have been emitted if the project had never been funded. This is a counterfactual that describes a possible world that did not happen and is estimated in a domain-specific manner. For example, as depicted in plot 300a in FIG. 3A, a direct air capture project can have baseline emissions 302a equal to 0. In another example, as depicted in plot 300b in FIG. 3B, a project that converts a ship to use clean fuel can have baseline emissions 302b equal to the ship's emissions without the conversion, which is estimated based on the average emissions of ships with similar duty cycles. Since the shipping industry is slowly converting to clean operation without a given project, these baseline emissions 302b shrinks to 0 at a small but consistent rate.

Actual emissions, e.g., emissions 304a and 304b, are the time series of the GHGs that are emitted by the project. These values can be non-negative for transitions that improve efficiency or reduce emissions and can be negative for projects that actively sequester and store emissions.

The difference between baseline and actual emissions can be defined as the time series of mitigation claims. The value of a mitigation can be measured as the societal damage the mitigation prevents. Emissions damage the climate and society each year they spend in the ecosphere without being removed. To capture this, mitigation claims can be vintaged (e.g., documented in the year when the mitigation occurred) with the year in which they occurred. For example, a mitigation claim for the year 2030 represents 10 years fewer avoided damages than a claim for 2020. Claims from different years and different GHGs can be converted based on equivalent damages avoided, using a socio-climatic simulation. In other words, one 2020 claim for CO2 mitigation can be established as equivalent to a few 2025 $CO_2$ claims, a large number of 2040 claims and less than one 2020 methane claim, e.g., because methane heats the climate much more than $CO_2$. In general, the machine learning model 121 can select tasks 102 for sets 110 that take advantage of the benefit of earlier vintage dates, e.g., overall lower costs of completing a project for the amount of GHG mitigation.

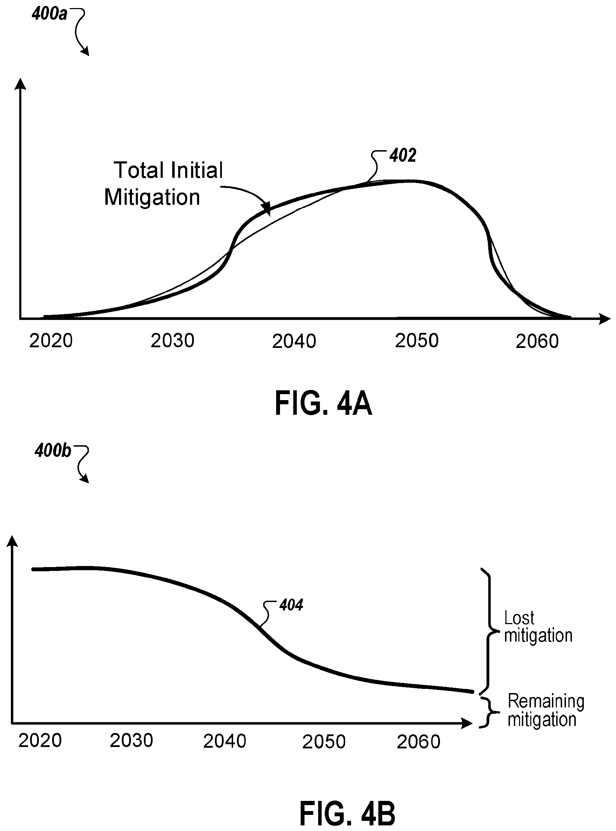

Finally, mitigation claims have the property of impermanence, which captures the fact that mitigation technologies may re-release mitigated GHGs back into the ecosphere over time. For example, storage in geological formations persists for tens of thousands of years with a high probability, while agricultural storage may fail due to natural disasters or changes in farmer practices over the scale of decades or centuries. In contrast, some mitigations are immune from re-release, such as reductions in emissions, because the lack of emission is not a physical object that may degrade over time. Impermanence is modeled as a stochastic time series of the portion of the claim's mitigated emissions that are re-released. This time series 402, e.g., as depicted in plot 400a in FIG. 4A, has a non-negative value at all times, where the sum must be less than or equal to the amount of GHGs initially mitigated.

Combining the two respective time series, the system 100 can select a set 110 corresponding to projects that can produce the time series of the amount GHGs mitigated for a given year that still remains mitigated in each subsequent year, e.g., as depicted in time series 404 in plot 400b of FIG. 4B.

## 3. Cross project correlation

A focus of the disclosed systems and methods is to enable GHG mitigation at a planetary scale, such that the behavior of sets 110 of tasks 102, e.g., portfolios of mitigation projects, is tracked rather than individual projects. In this context accounting for the correlations among the stochastic time series that represent the projects in a given portfolio is critical. For example, performing multiple ship fuel conversion projects may cause transition costs to drop if they are performed sequentially at the same dry dock due to reuse of equipment and personnel. In contrast, these costs will rise if the conversions are performed concurrently because of competition for engine parts. Once operational, the ships' costs will depend on the availability of fuel (e.g., methanol, ammonia, or hydrogen). This means that the operating costs of ships that use the same fuel can be highly correlated. Finally, the mitigation claims accrued by different ships will depend on the embedded emissions in the fuels, which are correlated within fuel type, as well as on the total miles traveled, which depend on the state of regional economies economy and thus correlated to the ships' routes.

## Portfolio Balancing and Risk Mitigation

To ensure that a portfolio of mitigation projects has highly predictable credit and mitigation attributes, the ML model 121 uses the successes of some projects to balance out failures by others, e.g., generates a set 110 based on failure correlation 134, repair potential 136, and future variations 138. To make this possible, an equivalence relationship can be established between the attributes of different projects such that having more of some attribute of one project makes up for having less of the same attribute of another project.

## 1. GHG Credits

Generally, the volume of GHG mitigation determines the value of GHG credit, e.g., the tasks 102 in a set 110 correspond to mitigating 1000 tons of carbon dioxide per year.

In some implementations, the GHG credit return streams of different projects can be denominated in credits (e.g., carbon offset credits, "carbon dioxide reduction" (CDR) credits), for example, by a value equivalence of a national currency. At a single point in time a given amount of credit value in one currency can be readily converted into credit value of another currency at a publicly available exchange rate using financial intermediaries. Credits collected or spent at different points in time can also be converted using the Time Value of Credit formulation, which uses a constant inflation rate r to model that a value of receiving a given amount of credit in the future is lower than getting the same amount today. Specifically, having m units of credit in year x results in having M units of credits f years later, according to Equation (1):

$$\text{Equation (1)} \quad M = m*(1+r)^f.$$

The equivalence relationship of credits across different projects and time periods makes it possible to combine the credit revenue streams from different projects in a portfolio so that lower mitigation values in some projects are compensated for higher mitigation values in others. The ML model 121 can receive input data 111 corresponding to the credit positive values for all the projects in a given year, convert this data into a common currency, such as US dollars, and add up the values. The resulting time series of currency-denominated credit positive revenue of the entire portfolio can be made extremely predictable by ensuring the correlation structure of the portfolio is well-diversified and further. For example, the ML model 121 can aggregate the credit positive revenue across time by computing metrics such as Net Present Value and Internal Rate of Return.

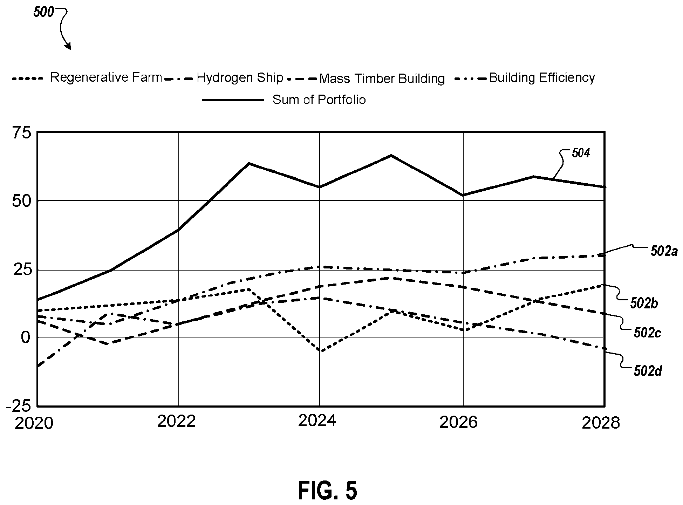

FIG. 5 shows a plot 500 for a portfolio of multiple projects, each projects having a respective time series, e.g., time series 502a, 502b, 502c, and 502d, of credit positive flow. While the time series of each project's credit positive flow can be highly variable, the sum 504 of all the credit flow time series is much more stable and predictable.

2. Mitigation Claims

a) Equivalence Model

GHG mitigation actions can be defined using an equivalence model, e.g., denominated in an amount of damages avoided as a result of the mitigation. Damages from GHG emissions may be estimated by, for example, (i) modeling the direct impact of the GHG on the ecosphere, (ii) estimating how these direct impacts affect societally-relevant phenomena (e.g., biodiversity and human health), (iii) converting these societal impacts into their credit value, or (iv) any combination thereof. For example, general GHG mitigations can be converted into the CO2 mitigation, e.g., 1 ton of mitigated methane is converted to 8 tons of mitigated CO2 in terms due to the larger effect of methane on warming. In some implementations, the GHG mitigation can be proportional to an aggregate warming avoided, e.g., 1.5°C.

There are many ways to perform each step of this estimation. One or more of the steps described below can be performed by one or more ML models 121 configured to receive input data 111 descriptive of a task 102, e.g., a GHG mitigation project, and output predictions related to impact(s) of the GHG mitigation project, e.g., the impacts described below.

The direct impact on the ecosphere can be separated into (i) the number of degrees of warming each unit of the GHG adds to the atmosphere while the GHG resides in the atmosphere and (ii) the increase in ocean temperatures and acidification due to ocean-atmosphere interactions. These impacts can be estimated by running a coupled climate simulation such as Clima or E3SM and comparing the scenarios with and without a given pattern of GHG emissions. The results will be sensitive to both the direct impacts of the GHG ($CO_2$, Methane, $N_2O$ or other) and how the GHG degrades through the ecosphere, which is different for each gas.

The societal impact of the direct damages can be estimated, for example, by leveraging recent research on the impacts of higher temperatures on extreme weather events, increased crime levels, agricultural output, as well as the impacts of ocean acidification on fisheries and ocean currents. Such impacts are captured within coupled socioeconomicclimate simulations, e.g., (Global Change Analysis Model) GCAM and (Greenhouse Gas Impact Value Estimator) GIVE. The credit value of these impacts can be measured via the effects on damages awarded for suffering and death by courts, e.g., "Social Cost of Carbon."

The equivalence relationship developed between mitigations of different GHGs by different projects in different years makes it possible for various types of mitigation failures to be compensated by mitigation successes in other projects. For example, mitigations in the same year combine via simple addition. A successful mitigation is defined as positive, and a mitigation reversal is defined as negative. The ML model 121 uses this compensation to generate project portfolios that diversify the sources of failure to make highly reliable predictions of how much GHG mitigation will be achieved by the portfolio as a whole.

There are two types of mitigation failure that require compensation: variation in mitigation and failure to maintain mitigation permanence.

b) Variation in mitigation

An amount of GHGs mitigated by a project may vary over time. This may be due to variation in the physical processes of mitigation (e.g., availability of clean power or efficiency of soil carbon retention), cyclicality in the economic climate (e.g., the number of miles a clean ship travels depends on the demand for goods), a changing emissions baseline (e.g., a new efficiency technology makes it cheaper to operate without emissions), or the like. A model can be trained to generate predictions, based on real-time data collected for the project, of a variation of the GHG mitigated by the project. The generated prediction can include future variations of the GHG mitigation, e.g., projected variation 1-15 years into the future, and/or present variations of the GHG mitigation, e.g., in real-time.

Failure to mitigate in a particular year X can be compensated by the same amount of successful mitigation in the portfolio at vintage year X. These mitigations may have actually occurred in year X or were mitigations from another year that were converted into year X mitigations via an exchange rate that conserves the amount of mitigated damages.

Variation in mitigation presents one additional detail: there may be a lag between the vintage year of a mitigation and the time when a measurement of the mitigation is available. For example, direct air capture facilities can measure the mitigation yield live (within minutes or days) as the capture occurs. In contrast, sequestration of carbon in soil is a very slow process that takes years to detect with adequate accuracy. This delay in detection presents a challenge in selling mitigations before the mitigations are fully measured, because if subsequent measurements show that the amount of GHGs that were actually mitigated in a given year is lower than what was sold, the set 110 should compensate for the missing amount of mitigation. This compensating mitigation can come from a task 102 that corresponds to the same amount of damages, which may be from a different year or gas.

To strengthen the infrastructure against unexpectedly low mitigation amounts, a balance can be maintained between keeping a reserve of (i) older vintage mitigations, (ii) credits to compensate for converting later vintage mitigations back to earlier years, (iii) or cash to buy permanence actions. The tradeoff between the two can depend on, for example, (A) the accuracy of the models that forecast the amount of GHGs mitigated (more accurate model means fewer unexpectedly low measurements), (B) the number of years before measurements are available (affects the cost of converting mitigations across this time span), and (C) the accuracy of predicting future prices for mitigations (affects the cost of acquiring them at measurement time).

c) Failure to maintain permanence

Failure to maintain permanence occurs in projects that have successfully mitigated GHG emissions but are vulnerable to having the mitigation reversed in the subsequent years, decades, or centuries. Such failures are very important for the developed infrastructure because these mitigations can violate the anticipated warrantied offsets, e.g., that the GHG is mitigated forever and thus completely balances an emission. Permanence failures affect successful mitigations that have successfully kept GHGs out of the ecosphere for some time and then re-release them years later. To compensate for such an event, the ML model 121 is configured to select tasks 102 counteract the re-release via an equal sized mitigation in the same year as the re-release.

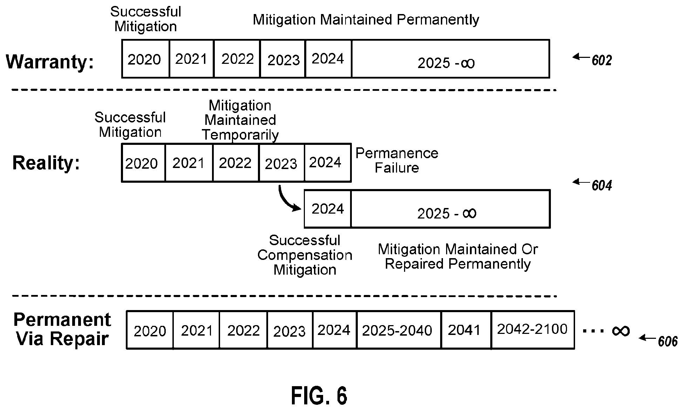

FIG. 6 shows diagrams representing mitigation selection techniques, such as replacing a task 102 with a replacement task as described in reference to FIG. 1. With reference to the top row 602, conventionally, a portfolio is generated assuming a warranty that is given for a GHG amount is successfully mitigated during a given year and stays permanently mitigated. However, with reference to the middle row 604 and bottom row 606, the reality is that the mitigation performed by a given project may re-release the GHGs some years later (in the example the entire amount mitigated in 2020 is re-released in 2024). This can be compensated by finding another project that mitigates the lost GHG amount in 2024, the year of the loss, thus ensuring that the promise of the warranty is maintained. This repair process can be repeated indefinitely, using later-vintage mitigations to maintain the quality of older and much more valuable mitigations. Since mitigation is expected to become more accessible over time a cost-effective strategy for maintaining mitigation permanence will likely employ cheap but less reliable mitigations in the short term and repair their future permanence failures using more reliable mitigations that will be much cheaper at that time. Other strategies for achieving permanence from impermanent assets can include, for example, buying futures (artificial) on projected mitigation projects (e.g., carbon dioxide removal (CDR)) which can be executed to mitigate the risk of impermanence of nature-based solutions. In other words, to offset risk associated with failure of the GHG mitigation projects in a GHG mitigation portfolio. In another example, permanence can be achieved from impermanent assets by incentivizing an ecosystem (building market supply/demand) to use ecologically-friendlier alternatives thereby converting an impermanent nature-based solution into a permanent solution, e.g., replacing steel with mass timber.

Portfolio Design

As described in reference to FIG. 1A, using ML model 121, the systems and methods described herein can generate portfolio of mitigation projects where (i) a flow of credit revenue, GHG mitigation credits obtained by interested parties, can be estimated accurately and produces an adequate return, (ii) a flow of mitigations can be estimated accurately enough such that warrantied offsets created from the portfolio's mitigations will stay valid with a high probability (e.g., estimate variation in mitigations each year and/or estimate permanence failures and the cost of repairing them), and (iii) a total credit revenue flow from projects and from selling warrantied offsets is positive with a high confidence.

To enact this, the ML model 121 is configured to (A) model (e.g., using ML model(s)) the attributes of every project that is being considered for inclusion in the portfolio (e.g., credit positive flows, mitigations, cost of repairing mitigation permanence failures), (B) simulate the probability distribution of the sum of these attributes across a portfolio of projects, accounting for correlations (e.g., using credit revenue time series, and mitigation time series), and (C) evaluate the impact of adding a given project to a project portfolio on the portfolio's overall profitability (including monetary profits and warrantied offset profits) such that the probability of violating warrantied offset contracts is kept below some threshold.

Additionally, the ML model 121 is developed to utilize simulations to (D) simulate the set of candidate mitigation projects that may be invested in over a period of time and the projects' changing credit generation structure, and I simulate the demand for mitigations over time, (F) simulate the market for mitigations to predict values of warrantied offsets across all vintages based on the supply that the infrastructure may provide on the market. The ML model 121 can generate real-time, dynamic rankings for the set of candidate mitigation projects, which can be updated based on assessment criteria, for example, real-time data collected from similar mitigation projects (e.g., risk/failure), correlation strength of the candidate mitigation projects with a current set of projects in the portfolio, and/or long-term goals of the portfolio (e.g., target mitigation/year, target credit positive flow, etc.) The set of candidate mitigation projects can be ranked based on the assessment criteria, and one or more candidate mitigation projects can be added/substituted into the portfolio.

With all the aforementioned parameters, the system 100 is capable of generating an optimal strategy, e.g., using one or more ML models, for building a portfolio of projects from the population of project opportunities to maximize profits while ensuring that the probability of successfully satisfying the warrantied offset contract of any year is >= x% for some very high threshold x%.

In some implementations, the ML model 121 is configured to include tasks 102 with overlapping project start/end dates, while ensuring steady credit positive revenue. Effective portfolios provide a steady schedule of returns even as the revenue, credit flow and mitigation streams of the underlying projects may vary over time. The variability may be very significant as individual projects have finite lifetime and may start and end quite suddenly. For example, a fleet of electric trucks may be operationalized by a major transportation carrier. This fleet will then be junked after a 10-15 year operational lifetime. In another example, a tropical forest that is protected from disruption may start growing new biomass and sequestering $CO_2$. However, as the forest's trees mature the amount of sequestration will drop, causing the project to be a cost center (requires maintenance of the carbon storage) but with little new mitigation. In another example, a power grid that currently operates mostly on coal was expected to transition to renewable power within 10 years. However, due to additional investment, the transition was accelerated by 10 years. The emissions avoided during the subsequent 10 years count as additional mitigation and can be sold on a carbon market.

However, after the 10 years are up, the investment has no causal effect on emissions and produces no additional mitigations, causing this income stream to stop suddenly.

Even as the individual projects in a portfolio start and stop, the system 100 can determine replacement tasks 132 to maintain a sufficiently overall risk 117. This can become challenging because of the many factors that determine which projects are added to and removed from the portfolio. Designing the portfolio to maintain both a high probability of profit and stable growth includes the use of optimization algorithms such as reinforcement learning that considers the millions of possible drivers of whether millions of possible projects may enter or exit the portfolio and learns effective strategies for choosing projects to achieve the objective of stability.

Portfolio Diversification and Repair

5. Several strategies can be implemented by the infrastructure to build and maintain a stable portfolio. For example, diversification of the portfolio and repair of the portfolio, the details of which are discussed in further detail below1.

Diversification

Risk diversification can provide robustness of the portfolio, e.g., in response to related projects failing due to a similar (e.g., correlated) failure mechanism. A first example focuses on risk diversification given a population of projects, the failure of which are correlated. Below are example project domains and associated correlation structures.

A. Forest-based risk diversification

A population of projects can have a complex failure correlation structure. For example, forest-based projects have an inherent risk of burning down or being affected by a given pest. In another example, forests that are in the same climate may be vulnerable to the same stresses even if they're on different continents (e.g., Spain and South California, or rainforests in Brazil, Indonesia and Africa). In another example, forests in the same ecosystem can be vulnerable to the same climatic conditions, such as heatwaves, as well as pest infestations since a given pest will thrive in the same weather conditions. In another example, physically nearby forests can be affected by a common population of pests or a single fire or flood that sweeps through the region.

B. Transportation fuels

Similarly, projects that convert transportation to use cleaner engines, e.g., road transport, marine and air, being converted to electric batteries, hydrogen fuel cells, or combustion engines that work on hydrogen, methanol, or ammonia, can have similar failure correlation structures. For example, transportation vehicles supply the economy, so any global economic downturn will affect demand for all transportation, while more localized recessions will reduce demand for transport in a given market or direction. For example, a North American recession will reduce demand for road transport within North America, ship/air transport to North America, as well as road transport in Asia for inter-factory shipping that supports production for the North American market. In another example, conversion of vehicles that use the same type of fuel will be correlated because constraints on the supply of this fuel will affect them all. Conversions in the same geographic region or for the same vehicle type will be correlated because delivery systems are regional and vehicle-specific. For example, ships are refueled at ports, which will not refuel trucks, while truck hydrogen refill stations are not appropriate for ships or planes. In another example, structurally similar conversions will depend on the availability of conversion facilities. For example, ships are converted at shipyards, and there is a limited supply of yards that are large enough to handle large transport vessels. Thus, the failure of conversions that use the same facilities will be correlated.

C. Building efficiency

Buildings use power to heat and cool the air and water and can be upgraded to improve efficiency. These projects may fail in various, correlated ways. For example, local building contractors might not be experienced in a given conversion and can do a poor job. The failures associated with this are correlated at the level of a common contractor. In another example, the carbon mitigation achieved by a given conversion depends on the way the building is operated (e.g., heating/cooling demand) as well as the local weather, which determines the need for heating/cooling. A warm winter means that less heating is required and thus, less carbon mitigation is achieved by the building efficiency conversion. This creates a regional correlation structure across all building efficiency conversion projects that share the same climate (e.g., single metro area, US Northeast region, or US west of Rockies).

2. Risk management

Managing a portfolio requires portfolio management entities, e.g., ML models, end users, or a combination thereof, to compute and generate predictions related to the probability distribution of the credit revenue, cost, and carbon mitigation streams coming from the entire project portfolio. For example, management entities demand information regarding the probability that costs drop by 1% and mitigations rise by .5% in year 5, accounting for all the ways in which individual projects may fail. The complex correlation structure across many projects means that there is no closed form solution or simple computation. This task can be accomplished by sampling the space of possible failure drivers, such as weather conditions, fuel production levels, fuel pipeline approvals, forest fire, pest rates, etc. The data resources can be diverse in source and format. The one or more ML models can receive multiple data formats and data sources and perform effective data scraping on the various data resources to generate a diverse data set representative of the failure drivers across multiple types of projects. The diverse data set can be used as input to the model to generate predictions related to project failure. For example, the ML model 121 calculates the impact of the failure drivers on projects to predict whether each project fails completely, temporarily stops operating or mitigating emissions, or suffers a more limited drop in efficiency. The ML model 121 then aggregates the impacts across all projects within each scenario to predict the impact of the scenario on the entire portfolio. The ML model 121 aggregates the overall, e.g., portfolio-level, outcomes across all scenarios to predict the full probability distribution. In the case of a portfolio with 1 million projects, 100 possible failure drivers, and 10 ways in which each driver may manifest. In this example, this process requires 1 billion individual model evaluations.

At times, some investors take first-loss stakes where investors absorb all risk of project failure. Remaining investors take second-loss, where the remaining investors are warrantied against failure. After the first-loss threshold has been reached, portfolio failures are repaired using additional projects.

3. Mitigation of Project Failures

The failure of mitigation projects can be challenging for two reasons. First, mitigation projects can be parceled as warrantied offsets, which are promises that some quantity of GHGs will be permanently removed from the ecosphere. As these warrantied offsets are generated when the GHG is mitigated, and well before the mitigation permanence a certified, there can be a possibility that future project failures will invalidate the mitigations on which the warrantied offsets are based.

The failure modes of mitigation projects can be analyzed along the following lines. A failure is defined as a reduction of a project's ability to operate, e.g., reduced costs/revenues, or mitigate, e.g., reduced mitigation claims. The failure may occur during either the transition or operation phase. Failures during the operation phase can affect the credit flow, revenues and/or mitigation claims after that point in time. Failures during the transition phase affect the entire operation phase, and the transition costs, which may increase if the transition proves to be more challenging to drop, if the transition is scaled back. A failure may affect a project's operational behavior either temporarily or permanently. The amount of time between a project's failure and failure detection, e.g., a given regenerative agriculture technique may fail to sequester carbon in soil, but this is only discovered a decade later.

4. Repair strategy

Repair of a failure to maintain carbon storage permanence in year X is accomplished by finding another project that successfully mitigated carbon in the same year or converting mitigation amount across years. The successful mitigation in year X undoes the permanence failure in year X. A failure in year X may be detected in year X or some years later. Once a failure is detected, the system 100 can execute a search for a repair project on the open market. This may be very expensive, especially if there was a delay in detection or a single phenomenon (e.g., regional forest fires) is causing many permanence failures. This makes maintaining a smaller portfolio of projects that are available to serve as repair actions advantageous. For example, ongoing projects that mitigate carbon each year and are available for being assigned as repair actions for some amount of failures in each year. Any mitigation that was not used in a given year X may be used to repair, e.g., failures in year X that are detected in a later year, and/or failures in a different year; this mitigation can repair a smaller amount of failure in years < X or a larger amount of failure in years > X. The exact amount depends on ensuring that the amount of climate damages of the failure and the repair are equivalent. **In** another example, inactive projects that may be activated as needed. These projects are likely to have high operating costs relative to the amount of mitigation they deliver (otherwise these projects would already be operational). Projects that take little time to activate may be used to start repair in the same year as the failure is detected. Projects that take years to start up may need to be started up early when permanence failure is likely (e.g., when a heavy fire season is being forecast) or may need to mitigate more carbon than was lost because the mitigation happens a few years later than the permanence failure. **In** some implementations, the system 100 determines to add options contracts to maintain the option to buy a certain amount of mitigation at a fixed price, as well as insurance contracts to pay out on a specific type of project failure event.

The strategy for maintaining the active or passive repair capability depends on many dynamic factors, including: (i) the state of the risk factors that contribute to project failure, (ii) the market price for carbon mitigations, (iii) the operating cost of maintaining mitigations that may be used for repair, (iv) the cost of maintaining inactive mitigation projects so the projects can be started up when needed, (v) the time delay in activating inactive mitigation projects, or (vi) any combination thereof.

Optimizing the policy for maintaining active and inactive projects, as well as projects on the market for use in repair, is challenging and requires sophisticated dynamic optimization algorithms. When the probabilities of all events are known, the optimal policy uses a mixed integer-linear solver such as Gurobi™ to choose the optimal set of projects across all years. In reality, the probabilities are not known perfectly and estimates of the probabilities shift with more information. Further, the set of projects in the portfolio changes over time based on availability of project opportunities, societal demand for carbon mitigation, and the market value of carbon offsets. This variability motivates the use of more general optimization techniques such as reinforcement learning, where the system 100 simulates millions of real-world project portfolios and permanence failure scenarios (accounting for failure correlation as above) and generates a high quality algorithm for choosing projects that can repair permanence failures.

Credits and GHG mitigations can be fungible, meaning that any credit or any mitigated ton of GHG is equivalent to any other credit or any other ton of GHGs, regardless of where the mitigation/credit comes from or how the mitigation/credit was collected. A GHG mitigation changes the concentration of some gas in the ecosphere (atmosphere or oceans) relative to what it would have been without the mitigation. A mitigation may take some GHG already in the ecosphere and store it in some inert form that does not damage the climate. Alternatively, a mitigation may do something to reduce emissions of a GHG, thus lowering its concentration relative to the scenario that would have happened without the mitigation. Both types of activities have the same effect on the ecosphere (reduced GHG concentration relative to the baseline of doing nothing) and thus are equivalent. There are several GHGs of primary concern ($CO_2$, CH4 and $NO_2$), each of which has a different impact on the climate. There are standard conversion factors to relate the damage of each GHG to the damage of some amount of $CO_2$, making it possible to directly compare the impact of mitigating different GHGs.

Building a Dynamic Portfolio Management Strategy

Effective management of mitigation project portfolios requires accurate knowledge of the probability and correlation structure of possible events that affect the revenues, costs, and carbon mitigation. Accordingly, the system 100 leveraging the ML model 121 can address the reality of imperfectly known events and possibility that the predicted mitigations may evolve over time. As the understanding evolves, the ML model 121 of the portfolio is adjusted, and the forecast of the probability distribution of the portfolio's profitability and repairability can be recalculated.

A. Evolution of probability estimates

Below are some examples of how probability estimates can evolve with time:

1) Pests infect forests and cause massive death of trees, which may release large amounts of CO2 stored within them. Understanding pest dynamics and how populations are driven by weather and forest conditions (e.g., ratios between grass, bushes, saplings, and mature trees or soil conditions) is currently very limited and may evolve over time. Indeed, the process of managing forests and collecting data on forest health will improve input data for simulations of forest ecosystems. The improved input data can be used to periodically recalculate carbon mitigation forecasts for forests.

2) The success of many conversion projects depends on the effectiveness of the conversion. Models of business execution are currently very poor and very specialized to each industrial sector and country, as models depend on local business culture and the sophistication of the local supply chains. Forecasting the risk of execution failure will require a data-driven modeling approach based on context-based time series ML models, which will be continually refined based on live observations of how different projects succeed, fail, or encounter delays.

3) The amount of mitigation achieved by some projects depends on the degree to which a given service is used. For example, if a ship's engines are adapted to use clean fuel, the amount of carbon mitigated directly depends on the number of miles the clean ship travels, since the same trips would have emitted $CO_2$ if the conversion was not performed. The same holds for building efficiency conversions (depends on building heating/cooling needs) and coal power plant conversion (depends on regional power demand). Models of how much a given service is used depend on many external factors such as weather and economic conditions, which are hard to forecast. The models of these phenomena will be based on existing climate and macroeconomic simulations and will be refined as more data of these mitigation projects is collected.

B. Using Failure to Modify Model

In many cases, data relating to failures can be useful for predicting the probability of failures. For example, when a model predicts that a forest fire is unlikely to occur, but a fire does nevertheless, this is a strong indication that the fire model is incomplete and requires revision. Some other examples may be:

1) A project to construct a mass timber office building fails to pass fire inspection, indicating a faulty model of what fire marshals in a given region look for.

2) A mass timber office building becoming infiltrated with water and sprouting mold within the walls. While this is not a mitigation failure, such a construction failure will affect overall demand for mass timber buildings and will affect estimates of the profit streams of all mass timber projects.

3) A hydrogen-fueled ship failing to sail because the receiving port does not have appropriate hydrogen refueling facilities. This failure indicates a problem with the specialized ML model of hydrogen supply and delivery systems.

4) A hydrogen-fueled ship sails but fails to mitigate carbon emissions because the hydrogen was sourced from high-emissions sources. This indicates a failure to model the supply of renewable hydrogen.

5) A program to incentivize households to install solar panels fails to generate sufficient response, causing the amount of achieved mitigation to be lower than expected. This indicates a problem in the econometric model for solar adoption, or a problem with the model for households' power demand (e.g., the houses use more power at night than expected).

As discussed with reference to replacement tasks 132, model revisions as a result of failures may have a significant impact on the predictions of the overall ML model 121. Revisions to the ML model 121 can be implemented by (i) continually recomputing the portfolio model based on sub-model revisions (e.g., specialized models for the GHG mitigation of a direct air capture facility) and (ii) continually reevaluating the space of possible sub-model revisions to ensure that the portfolio's predictions are not overly reliant on a given model being perfectly correct. Hundreds or thousands of variants for each sub-model can be considered, where there will be hundreds to thousands of sub-models, requiring a massive parallel computation of all the model variants, across all the millions of scenarios that may drive project failure.

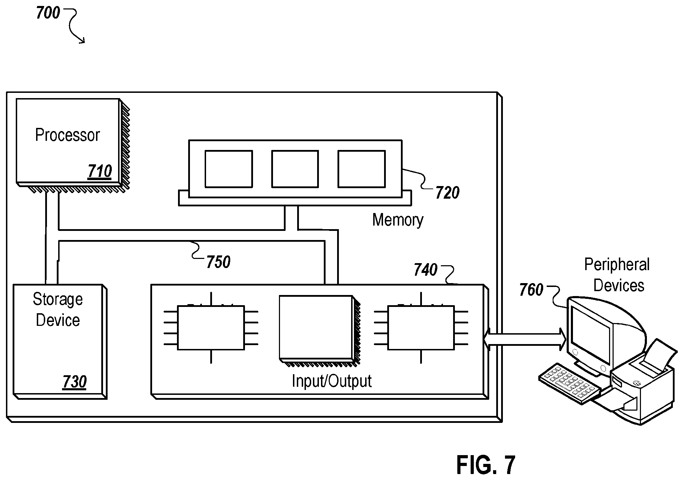

FIG. 7 is a block diagram of an example computer system 700 that can be used to perform operations described above. The system 700 includes a processor 710, a memory 720, a storage device 730, and an input/output device 740. Each of the components 710, 720, 730, and 740 can be interconnected, for example, using a system bus 750. The processor 710 is capable of processing instructions for execution within the system 700. In one implementation, the processor 710 is a single-threaded processor. In another implementation, the processor 710 is a multi-threaded processor. The processor 710 is capable of processing instructions stored in the memory 720 or on the storage device 730.

The memory 720 stores information within the system 700. In one implementation, the memory 720 is a computer-readable medium. In one implementation, the memory 720 is a volatile memory unit. In another implementation, the memory 720 is a non-volatile memory unit.

The storage device 730 is capable of providing mass storage for the system 700. In one implementation, the storage device 730 is a computer-readable medium. In various different implementations, the storage device 730 can include, for example, a hard disk device, an optical disk device, a storage device that is shared over a network by multiple computing devices (e.g., a cloud storage device), or some other large capacity storage device.

The input/output device 740 provides input/output operations for the system 700. In one implementation, the input/output device 740 can include one or more of a network interface device, e.g., an Ethernet card, a serial communication device, e.g., and RS-232 port, and/or a wireless interface device, e.g., and 802.11 card. In another implementation, the input/output device can include driver devices configured to receive input data and send output data to peripheral devices 760, e.g., keyboard, printer, and display devices. Other implementations, however, can also be used, such as mobile computing devices, mobile communication devices, set-top box television client devices, etc.

Although an example processing system has been described in FIG. 7, implementations of the subject matter and the functional operations described in this specification can be implemented in other types of digital electronic circuitry, or in computer software, firmware, or hardware, including the structures disclosed in this specification and their structural equivalents, or in combinations of one or more of them.

The subject matter and the actions and operations described in this specification can be implemented in digital electronic circuitry, in tangibly-embodied computer software or firmware, in computer hardware, including the structures disclosed in this specification and their structural equivalents, or in combinations of one or more of them. The subject matter and the actions and operations described in this specification can be implemented as or in one or more computer programs, e.g., one or more modules of computer program instructions, encoded on a computer program carrier, for execution by, or to control the operation of, data processing apparatus. The carrier can be a tangible non-transitory computer storage medium. Alternatively or in addition, the carrier can be an artificially-generated propagated signal, e.g., a machine-generated electrical, optical, or electromagnetic signal, that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

The term "data processing apparatus" encompasses all kinds of apparatus, devices, and machines for processing data, including by way of example a programmable processor, a computer, or multiple processors or computers. Data processing apparatus can include special-purpose logic circuitry, e.g., an FPGA (field programmable gate array), an ASIC (application-specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

A computer program can be written in any form of programming language, including compiled or interpreted languages, or declarative or procedural languages; and it can be deployed in any form, including as a stand-alone program, e.g., as an app, or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub-programs, or portions of code.

The processes and logic flows described in this specification can be performed by one or more computers executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read-only memory or a random access memory or both. The essential elements of a computer are a central processing unit for executing instructions and one or more memory devices for storing instructions and data. The central processing unit and the memory can be supplemented by, or incorporated in special-purpose logic circuitry.

Generally, a computer will also include, or be operatively coupled to, one or more mass storage devices, and be configured to receive data from or transfer data to the mass storage devices. The mass storage devices can be, for example, magnetic, magneto-optical, or optical disks, or solid state drives. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

To provide for interaction with a user, the subject matter described in this specification can be implemented on one or more computers having, or configured to communicate with, a display device, e.g., a LCD (liquid crystal display) monitor, or a virtual-reality (VR) or augmented-reality (AR) display, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback and responses provided to the user can be any form of sensory feedback, e.g., visual, auditory, speech, or tactile; and input from the user can be received in any form, including acoustic, speech, or tactile input, including touch motion or gestures, or kinetic motion or gestures or orientation motion or gestures. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform the operations or actions. That one or more computer programs is configured to perform particular operations or actions means that the one or more programs include instructions that, when executed by data processing apparatus, cause the apparatus to perform the operations or actions. That special-purpose logic circuitry is configured to perform particular operations or actions means that the circuitry has electronic logic that performs the operations or actions.

The subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what is being claimed, which is defined by the claims themselves, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this by itself should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1.   A computer-implemented method for updating a set of tasks comprising:

generating (210) a set of tasks, wherein each task comprises a greenhouse gas, GHG, offset potential and one or more failure mechanisms, and wherein the set comprises a metric;
determining (220), by a machine learning model and based on multiple data types from a plurality of sources, wherein at least one of the data types is based on real-world measurements, that an overall risk score of the set exceeds a first failure threshold due to a risk score of a task of the set of tasks exceeding a second threshold;
selecting (230) a replacement task for the task, the selecting comprising:

> receiving (231), a plurality of replacement candidates, each replacement candidate comprising a candidate GHG offset potential and one or more candidate failure mechanisms;
> assigning (232), by the machine learning model and to each of the plurality of replacement candidates, a replacement score for the replacement candidate based on a failure correlation of the replacement candidate with respect to each other sets of the set of tasks;
> ranking (233) the plurality of replacement candidates based on the replacement scores; and
> selecting (234), based on the ranking, the replacement task

> generating (240) an updated set of tasks including the replacement task;
> and
> generating instructions to manage the updated set of tasks with one or more project performers.

2. The method of claim 1, wherein assigning the replacement score for the replacement candidate based on failure correlation comprises assigning the replacement score based on (i) predictive rates of failure and (ii) a predicted GHG offset potential.

3. The method of claim 1, wherein:

> a) ranking the plurality of replacement candidates based on the replacement scores further comprises:

> > i) determining, for the task of the set of tasks exceeding the failure threshold, a mitigation failure value; and
> > ii) ranking the replacement candidates based on respective potential of each candidate replacement project to repair the mitigation failure value; or

b) ranking the plurality of replacement candidates further comprises ranking the replacement candidates based on real-time data collected from similar mitigation projects.

4. The method of claim 1, wherein determining, by the machine learning model and based on multiple data types from the plurality of sources, that the task of the set of tasks exceeds the failure threshold for the one or more failure mechanisms comprises:
predicting, by the machine learning model and based on real-time data collected for the task based on the multiple data types from the plurality of sources, that future variations of a mitigation for the task are below a threshold mitigation.

5. The method of claim 1, further comprising:

> determining, by the machine learning model and for a failure scenario, an impact on mitigation outcomes for respective failure mechanisms of each of the tasks of the set;
> predicting, based on aggregated impacts across all the tasks of the set, a total impact of the scenario on the set of tasks; and
> using the total impact, determining the overall risk score.

6. The method of claim 1, further comprising training the machine learning model comprising:

> receiving training data, from the plurality of sources and including multiple data types, data representative of a plurality of tasks; and
> providing, to the machine learning model, the training data,
> wherein the training data representative of each task includes (i) rates of failure, (ii) GHG offset results, (iii) correlation strength to one or more other tasks.

7. The method of claim 6, wherein providing the training data comprises updating the training data using a transfer learning machine learning model, and training the machine learning model comprises using the updated training data to train the machine learning model, optionally wherein the transfer learning machine learning model is configured to:

> based on an image associated with one of the tasks, determine a set of simulation parameters for a simulation simulating the one of the tasks; and
> provide the set of simulation parameters as a portion of the training data to a machine learning model.

8. The method of claim 1, further comprising:

determining, for one or more of the tasks of the set of tasks, a permanence action supportive of the task, the permanence action counteracting at least one of the one or more failure mechanisms; and
generating, the updated set of tasks including the permanence action.

9. The method of claim 8, wherein:

the method further comprises determining that the selected replacement task has a first failure mechanism, wherein the permanence action has a second failure mechanism different from the first failure mechanism; or
the permanence action comprises generating, in a market ecosystem, an incentive supportive of one or more of the tasks, wherein the incentive reduces a probability of the at least one of the one or more failure mechanisms.

10. The method of claim 8, wherein determining the permanence action comprises:

determining, for a set of two or more tasks of the set, that the permanence action counteracts the respective failure mechanisms of the set of two or more tasks; or
determining that the permanence action is supportive of the task for a period of time, wherein the permanence action supportive of the task is an investment of a carbon credit, carbon offset, or a combination thereof, for a period of at least 5 years.

11. The method of claim 1, further comprising:

receiving new input data including data indicating at least one of the GHG offset potential, the failure mechanism, and the risk score of an associated task is incorrect;
determining updated values for the at least one of the GHG offset potential, the failure mechanism, and the risk score of the associated task that is indicated to be incorrect; and
updating the set with the updated values for the at least one of the GHG offset potential, the failure mechanism, and the risk score of the associated task that is indicated to be incorrect.

12. The method of claim 11, wherein:

a) the new input data includes data regarding ecological conditions related to the failure mechanisms associated with respective tasks; or
b) the method further comprises:

in response to updating the set with the updated values, determining that the overall risk of the set exceeds the failure threshold, and
in response to determining that the overall risk of the set exceeds the failure threshold, selecting another replacement task for the set.

13. The method of claim 1, further comprising:

receiving measurements indicating progress of the set of tasks, the receiving comprising:

receiving, from a sensor, data indicative of an ecological condition, and
using the data indicative of the ecological condition as input data, executing a simulation to provide output data, wherein comparing the measurements of the metric comprises using the output data, and comparing the measurements to the metric; and

in response to the comparison between the measurements and the metric, determining to select another replacement task.

14. A system comprising one or more computers (700) and one or more storage devices (730) on which are stored instructions that are operable, when executed by the one or more computers, to cause the one or more computers to perform the method of any of the previous claims.

15. A non-transitory computer storage medium (730) encoded with instructions that, when executed by one or more computers (700), cause the one or more computers to perform the method of any of claims 1 to 13.

**Patentansprüche**

1. Computerimplementiertes Verfahren zur Aktualisierung eines Satzes von Aufgaben, umfassend:

Generieren (210) eines Satzes von Aufgaben, wobei jede Aufgabe ein Treibhausgas-Offset-Potenzial, THG-Offset-Potenzial, und einen oder mehrere Fehlermechanismen umfasst und wobei der Satz eine Metrik umfasst;
Bestimmen (220), durch ein Maschinenlernmodell und basierend auf multiplen Datentypen aus einer Vielzahl von Quellen, wobei mindestens einer der Datentypen auf realen Messungen basiert, dass ein Gesamtrisiko-Score des Satzes eine ersten Fehlerschwelle aufgrund dessen überschreitet, dass ein Risiko-Score einer Aufgabe des Satzes von Aufgaben eine zweite Schwelle überschreitet; Auswählen (230) einer Ersatzaufgabe für die Aufgabe, wobei das Auswählen Folgendes umfasst:

Empfangen (231) einer Vielzahl von Ersatzkandidaten, wobei jeder Ersatzkandidat ein Kandidaten-THG-Offset-Potenzial und einen oder mehrere Kandidaten-Fehlermechanismen umfasst;

Zuordnen (232), durch das Maschinenlernmodell und zu jedem der Vielzahl von Ersatzkandidaten, eines Ersatz-Scores für den Ersatzkandidaten basierend auf einer Fehlerkorrelation des Ersatzkandidaten in Bezug auf jeweils andere Sätze des Satzes von Aufgaben;

Einstufen (233) der Vielzahl von Ersatzkandidaten basierend auf den Ersatz-Scores; und

Auswählen (234), basierend auf der Einstufung, der Ersatzaufgabe,

Generieren (240) eines aktualisierten Satzes von Aufgaben einschließlich der Ersatzaufgabe; und

Generieren von Anweisungen, um den aktualisierten Satz von Aufgaben mit einem oder mehreren Projektdurchführern zu verwalten.

2. Verfahren nach Anspruch 1, wobei das Zuordnen des Ersatz-Scores für den Ersatzkandidaten basierend auf einer Fehlerkorrelation das Zuordnen des Ersatz-Scores basierend auf (i) prädiktiven Fehlerquoten und (ii) einem vorhergesagten THG-Offset-Potenzial umfasst.

3. Verfahren nach Anspruch 1, wobei:

a) das Einstufen der Vielzahl von Ersatzkandidaten basierend auf den Ersatz-Scores ferner Folgendes umfasst:

i) Bestimmen, für die Aufgabe des Satzes von Aufgaben, die die Fehlerschwelle überschreiten, eines Abschwächungsfehlerwerts; und

ii) Einstufen der Ersatzkandidaten basierend auf einem jeweiligen Potenzial jedes Kandidatenersatzprojekts, um den Abschwächungsfehlerwert zu reparieren; oder

b) das Einstufen der Vielzahl von Ersatzkandidaten ferner das Einstufen der Ersatzkandidaten basierend auf Echtzeitdaten, die aus ähnlichen Abschwächungsprojekten gesammelt werden, umfasst.

4. Verfahren nach Anspruch 1, wobei das Bestimmen, durch das Maschinenlernmodell und basierend auf multiplen Datentypen aus der Vielzahl von Quellen, dass die Aufgabe des Satzes von Aufgaben die Fehlerschwelle für den einen oder die mehreren Fehlermechanismen überschreitet, Folgendes umfasst:

Vorhersagen, durch das Maschinenlernmodell und basierend auf Echtzeitdaten, die für die Aufgabe basierend auf den multiplen Datentypen aus der Vielzahl von Quellen gesammelt werden, dass zukünftige Variationen einer Abschwächung für die Aufgabe unterhalb einer Schwellenabschwächung liegen.

5. Verfahren nach Anspruch 1, ferner umfassend:

Bestimmen, durch das Maschinenlernmodell und für ein Fehlerszenario, einer Auswirkung auf Abschwächungsergebnisse für jeweilige Fehlermechanismen jeder der Aufgaben des Satzes;

Vorhersagen, basierend auf aggregierten Auswirkungen über all die Aufgaben des Satzes hinweg, einer Gesamtauswirkung des Szenarios auf den Satz von Aufgaben; und,

unter Verwendung der Gesamtauswirkung, Bestimmen des Gesamtrisiko-Scores.

6. Verfahren nach Anspruch 1, ferner umfassend das Trainieren des Maschinenlernmodells, umfassend:

Empfangen von Trainingsdaten aus der Vielzahl von Quellen und einschließlich multipler Datentypen, von Daten, die für eine Vielzahl von Aufgaben repräsentativ sind; und

Bereitstellen, an das Maschinenlernmodell, der Trainingsdaten,

wobei die Trainingsdaten, die für jede Aufgabe repräsentativ sind, (i) Fehlerquoten, (ii) THG-Offset-Ergebnisse, (iii) Korrelationsstärke bezüglich einer oder mehreren anderen Aufgaben einschließen.

7. Verfahren nach Anspruch 6, wobei das Bereitstellen der Trainingsdaten das Aktualisieren der Trainingsdaten unter Verwendung eines Maschinenlernmodells für das Transferlernen umfasst und das Trainieren des Maschinenlernmodells das Verwenden der aktualisierten Trainingsdaten umfasst, um das Maschinenlernmodell zu trainieren, wobei optional das Maschinenlernmodell für das Transferlernen zu Folgendem konfiguriert ist:

basierend auf einem Bild, das mit einer der Aufgaben assoziiert ist, Bestimmen eines Satzes von Simulationsparametern für eine Simulation, die die eine der Aufgaben simuliert; und

Bereitstellen des Satzes von Simulationsparametern als ein Teil der Trainingsdaten an ein Maschinenlernmodell.

8. Verfahren nach Anspruch 1, ferner umfassend:

Bestimmen, für eine oder mehrere der Aufgaben des Satzes von Aufgaben, einer Permanenzaktion, von der die Aufgabe unterstützt wird, wobei die Permanenzaktion mindestens einem von dem einen oder den mehreren Fehlermechanismen entgegenwirkt; und Generieren des aktualisierten Satzes von Aufgaben einschließlich der Permanenzaktion.

9. Verfahren nach Anspruch 8, wobei:

das Verfahren ferner das Bestimmen dessen umfasst, dass die ausgewählte Ersatzaufgabe einen ersten Fehlermechanismus aufweist, wobei die Permanenzaktion einen zweiten Fehlermechanismus aufweist, der sich von dem ersten Fehlermechanismus unterscheidet; oder die Permanenzaktion das Generieren, in einem Marktökosystem, eines Anreizes umfasst, der eine oder mehrere der Aufgaben unterstützt, wobei der Anreiz eine Wahrscheinlichkeit des mindestens einen von dem einen oder den mehreren Fehlermechanismen reduziert.

10. Verfahren nach Anspruch 8, wobei das Bestimmen der Permanenzaktion Folgendes umfasst:

Bestimmen, für einen Satz von zwei oder mehr Aufgaben des Satzes, dass die Permanenzaktion den jeweiligen Fehlermechanismen des Satzes von zwei oder mehr Aufgaben entgegenwirkt; oder Bestimmen, dass die Permanenzaktion die Aufgabe für einen Zeitraum unterstützt, wobei die Permanenzaktion, von der die Aufgabe unterstützt wird, eine Investition eines Kohlenstoffkredits, eines Kohlenstoff-Offsets oder einer Kombination davon für einen Zeitraum von mindestens 5 Jahren ist.

11. Verfahren nach Anspruch 1, ferner umfassend:

Empfangen neuer Eingabedaten einschließlich Daten, die angeben, dass mindestens eines von dem THG-Offset-Potenzial, dem Fehlermechanismus und dem Risiko-Score einer assoziierten Aufgabe inkorrekt ist; Bestimmen aktualisierter Werte für das mindestens eine von dem THG-Offset-Potenzial, dem Fehlermechanismus und dem Risiko-Score der assoziierten Aufgabe, das als inkorrekt angegeben wird; und

Aktualisieren des Satzes mit den aktualisierten Werten für das mindestens eine von dem THG-Offset-Potenzial, dem Fehlermechanismus und dem Risiko-Score der assoziierten Aufgabe, das als inkorrekt angegeben wird.

12. Verfahren nach Anspruch 11, wobei:

a) die neuen Eingabedaten Daten hinsichtlich ökologischer Bedingungen im Zusammenhang mit den mit jeweiligen Aufgaben assoziierten Fehlermechanismen einschließen; oder (b) das Verfahren ferner Folgendes umfasst:

als Reaktion auf das Aktualisieren des Satzes mit den aktualisierten Werten, Bestimmen, dass das Gesamtrisiko des Satzes die Fehlerschwelle überschreitet, und als Reaktion auf das Bestimmen dessen, dass das Gesamtrisiko des Satzes die Fehlerschwelle überschreitet, Auswählen einer anderen Ersatzaufgabe für den Satz.

13. Verfahren nach Anspruch 1, ferner umfassend: Empfangen von Messungen, die einen Fortschritt des Satzes von Aufgaben angeben, wobei das Empfangen Folgendes umfasst:

Empfangen, aus einem Sensor, von Daten, die eine ökologische Bedingung angeben, und Verwenden der Daten, die den ökologischen Zustand angeben, als Eingabedaten, Ausführen einer Simulation, um Ausgabedaten bereitzustellen, wobei das Vergleichen der Messungen der Metrik das Verwenden der Ausgabedaten umfasst, und Vergleichen der Messungen mit der Metrik; und, als Reaktion auf den Vergleich zwischen den Messungen und der Metrik, Bestimmen, eine andere Ersatzaufgabe auszuwählen.

14. System, umfassend einen oder mehrere Computer (700) und eine oder mehrere Speichervorrichtungen (730), auf denen Anweisungen gespeichert sind, die bei Ausführung durch den einen oder die mehreren Computer betriebsfähig sind, um zu bewirken, dass der eine oder die mehreren Computer das Verfahren nach einem der vorhergehenden Ansprüche durchführt/durchführen.

15. Nicht-transitorisches Computerspeichermedium (730), das mit Anweisungen kodiert ist, die bei Ausführung durch einen oder mehrere Computer (700) bewirken, dass der eine oder die mehreren Computer das Verfahren nach einem der Ansprüche 1 bis 13 durchführt/durchführen.

## Revendications

1. Procédé mis en œuvre par ordinateur permettant de mettre à jour un ensemble de tâches comprenant : la génération (210) d'un ensemble de tâches, chaque tâche comprenant un potentiel de décalage de gaz à effet de serre, GHG, et un ou plusieurs mécanismes de défaillance, et ledit ensemble comprenant une métrique ;

   la détermination (220), par un modèle d'apprentissage automatique et sur la base de multiples types de données provenant d'une pluralité de sources, au moins l'un des types de données étant basé sur des mesures du monde réel, qu'un score de risque global de l'ensemble dépasse un premier seuil de défaillance en raison d'un score de risque d'une tâche de l'ensemble de tâches dépassant un second seuil ;
   la sélection (230) d'une tâche de remplacement pour la tâche, la sélection comprenant : la réception (231), d'une pluralité de candidats de remplacement, chaque candidat de remplacement comprenant un potentiel de décalage GHG candidat et un ou plusieurs mécanismes de défaillance candidats ;
   l'attribution (232), par le modèle d'apprentissage automatique et à chacun de la pluralité de candidats de remplacement, d'un score de remplacement pour le candidat de remplacement sur la base d'une corrélation de défaillance du candidat de remplacement par rapport à chacun des autres ensembles de l'ensemble de tâches ;
   le classement (233) de la pluralité de candidats de remplacement sur la base des scores de remplacement ; et
   la sélection (234), sur la base du classement, de la tâche de remplacement, la génération (240) d'un ensemble de tâches mis à jour incluant la tâche de remplacement ; et
   la génération d'instructions pour gérer l'ensemble de tâches mis à jour avec un ou plusieurs exécutants de projet.

2. Procédé de la revendication 1, ladite attribution du score de remplacement pour le candidat de remplacement sur la base d'une corrélation de défaillance comprenant l'attribution du score de remplacement sur la base (i) de taux prédictifs de défaillance et (ii) d'un potentiel de décalage GHG prédit.

3. Procédé de la revendication 1,

   a) ledit classement de la pluralité de candidats de remplacement sur la base des scores de remplacement comprenant en outre :

   i) la détermination, pour la tâche de l'ensemble de tâches dépassant le seuil de défaillance, d'une valeur de défaillance d'atténuation ; et
   ii) le classement des candidats de remplacement sur la base du potentiel respectif de chaque projet de remplacement candidat à corriger la valeur de défaillance d'atténuation ; ou

   b) ledit classement de la pluralité de candidats de remplacement comprenant en outre le classement des candidats de remplacement sur la base de données en temps réel collectées à partir de projets d'atténuation similaires.

4. Procédé de la revendication 1, ladite détermination, par le modèle d'apprentissage automatique et sur la base de multiples types de données provenant de la pluralité de sources, que la tâche de l'ensemble de tâches dépasse le seuil de défaillance pour le ou les mécanismes de défaillance comprenant :
   la prédiction, par le modèle d'apprentissage automatique et sur la base de données en temps réel collectées pour la tâche sur la base des multiples types de données provenant de la pluralité de sources, que les variations futures d'une atténuation pour la tâche sont inférieures à une atténuation seuil.

5. Procédé de la revendication 1, comprenant en outre :

   la détermination, par le modèle d'apprentissage automatique et pour un scénario de défaillance, d'un impact sur les résultats d'atténuation pour les mécanismes de défaillance respectifs de chacune des tâches de l'ensemble ;
   la prédiction, sur la base d'impacts agrégés sur toutes les tâches de l'ensemble, d'un impact total du scénario sur l'ensemble de tâches ; et
   à l'aide de l'impact total, la détermination du score de risque global.

6. Procédé de la revendication 1, comprenant en outre l'entraînement du modèle d'apprentissage automatique comprenant :

   la réception de données d'entraînement, provenant de la pluralité de sources et comprenant de multiples types de données, des données représentatives d'une pluralité de tâches ; et
   la fourniture, au modèle d'apprentissage automatique, des données d'entraînement, lesdites données d'entraînement représentant chaque tâche comprenant (i) les taux de défaillance, (ii) les résultats de décalage GHG, (iii) la force de corrélation à une ou plusieurs autres tâches.

7. Procédé de la revendication 6, ladite fourniture des données d'entraînement comprenant la mise à jour des données d'entraînement à l'aide d'un modèle d'apprentissage automatique par apprentissage par transfert, et l'entraînement du modèle d'apprentissage automatique comprenant l'utilisation des données d'entraînement mises à jour pour entraîner le modèle d'apprentissage automatique, éventuellement ledit modèle d'apprentissage automatique par apprentissage par transfert étant configuré pour :

sur la base d'une image associée à l'une des tâches, déterminer un ensemble de paramètres de simulation pour une simulation simulant l'une des tâches ; et

fournir l'ensemble des paramètres de simulation en tant que partie des données d'entraînement à un modèle d'apprentissage automatique.

8. Procédé de la revendication 1, comprenant en outre :

la détermination, pour une ou plusieurs des tâches de l'ensemble de tâches, d'une action de permanence soutenant la tâche, l'action de permanence contrecarrant au moins l'un du ou des mécanismes de défaillance ; et

la génération de l'ensemble de tâches mis à jour comprenant l'action de permanence.

9. Procédé de la revendication 8,

ledit procédé comprenant en outre la détermination que la tâche de remplacement sélectionnée possède un premier mécanisme de défaillance, ladite action de permanence possédant un second mécanisme de défaillance différent du premier mécanisme de défaillance ; ou ladite action de permanence comprenant la génération, dans un écosystème de marché, d'une incitation soutenant une ou plusieurs des tâches, ladite incitation réduisant une probabilité de l'au moins un du ou des mécanismes de défaillance.

10. Procédé de la revendication 8, ladite détermination de l'action de permanence comprenant :

la détermination, pour un ensemble de deux tâches ou plus de l'ensemble, que l'action de permanence contrecarre les mécanismes de défaillance respectifs de l'ensemble de deux tâches ou plus ; ou

la détermination que l'action de permanence soutient la tâche pendant une période de temps, ladite action de permanence soutenant la tâche étant un investissement d'un crédit carbone, d'un décalage de carbone ou d'une combinaison de ceux-ci, pendant une période d'au moins 5 ans.

11. Procédé de la revendication 1, comprenant en outre :

la réception de nouvelles données d'entrée, comprenant des données indiquant qu'au moins l'un du potentiel de décalage GHG, du mécanisme de défaillance et du score de risque d'une tâche associée, est incorrect ;

la détermination de valeurs mises à jour pour l'au moins un du potentiel de décalage GHG, du mécanisme de défaillance et du score de risque de la tâche associée qui est indiqué comme étant incorrect ; et

la mise à jour de l'ensemble avec les valeurs mises à jour pour l'au moins un du potentiel de décalage GHG, du mécanisme de défaillance et du score de risque de la tâche associée qui est indiqué comme incorrect.

12. Procédé de la revendication 11,

a) lesdites nouvelles données d'entrée comprenant des données concernant les conditions écologiques liées aux mécanismes de défaillance associés aux tâches respectives ; ou

b) ledit procédé comprenant en outre :

en réponse à la mise à jour de l'ensemble avec les valeurs mises à jour, la détermination que le risque global de l'ensemble dépasse le seuil de défaillance, et

en réponse à la détermination que le risque global de l'ensemble dépasse le seuil de défaillance, la sélection d'une autre tâche de remplacement pour l'ensemble.

13. Procédé de la revendication 1, comprenant en outre : la réception de mesures indiquant l'avancement de l'ensemble de tâches, la réception comprenant :

la réception, en provenance d'un capteur, de données indiquant une condition écologique, et à l'aide des données indiquant la condition écologique comme données d'entrée, l'exécution d'une simulation pour fournir des données de sortie, la comparaison des mesures de la métrique comprenant l'utilisation des données de sortie, et

la comparaison des mesures à la métrique ; et en réponse à la comparaison entre les mesures et la métrique, la détermination de sélectionner une autre tâche de remplacement.

14. Système comprenant un ou plusieurs ordinateurs (700) et un ou plusieurs dispositifs de stockage (730) sur lesquels sont stockées des instructions qui, lorsqu'elles sont exécutées par le ou les ordinateurs, servent à amener le ou les ordinateurs à réaliser le procédé de l'une quelconque des revendications précédentes.

**15.** Support de stockage informatique non transitoire (730) codé avec des instructions qui, lorsqu'elles sont exécutées par un ou plusieurs ordinateurs (700), amènent le ou les ordinateurs à réaliser le procédé de l'une quelconque des revendications 1 à 13.

100

Set 110

| Overall Risk 117 Failure Threshold 112 | | Metric 108 |

| Task 102a | Task 102b | Task 102c |
| --- | --- | --- |
| Offset Potential 104a | Offset Potential 104b | Offset Potential 104c |
| Failure Mechanism 106a | Failure Mechanism 106b | Failure Mechanism 106c |
| Risk Score 115a | Risk Score 115b | Risk Score 115c |
| Mitigation Failure Value 109a | Mitigation Failure Value 109b | Mitigation Failure Value 109c |

Data Sources 105

Machine Learning Model 121

| Input Data 111 | Failure Correlation 134 |
| --- | --- |
| Replacement Candidates 126 | Replacement Score 128 |
| Repair Potential 136 | Future Variations 138 |

Replacement Task 132

Offset Potential 104d

Failure Mechanism 106d

Permanence Action 142

**FIG. 1A**

**FIG. 1B**

FIG. 1C

# FIG. 1D

Training Data 150

Scenario A

Simulation
Parameters 152a

*154a*

Scenario B

No Simulation
Parameters

*154b*

Data
Sources
105

Machine Learning Model 121

Transfer Learning Model 123

Updated Training Data 151

Scenario A

Simulation
Parameters 152a

*154a*

Scenario B

Simulation
Parameters 152b

*154b*

**FIG. 1E**

Phase I — Base Simulation (191) → (192) → Transformer Neural Model (193)

Phase II — Base Simulation (191) → (192) → Transformer Neural Model (193)

Phase III — Base Simulation 1 (US) (191a), Base Simulation 2 (Canada) (191b), Target Simulation 1 (Europe) (191c) → (193) → Transformer Neural Model (193)

**FIG. 1F**

EP 4 558 940 B1

FIG. 1G

34

FIG. 2A

FIG. 2B

*300a*

Direct Air Capture

**Baseline Emission** ⌐*302a* **Mitigation Claims**

2021    2023    2024    2027

**Actual Emission**

*304a*

## FIG. 3A

*300b*

Ship Conversion

**Baseline Emission**

⌐*302b*

**Mitigation Claims**

**Actual Emission**

*304b*

2021    2023    2024    2027

## FIG. 3B

400a

Total Initial
Mitigation

402

2020    2030    2040    2050    2060

# FIG. 4A

400b

404

Lost
mitigation

Remaining
mitigation

2020    2030    2040    2050    2060

# FIG. 4B

**FIG. 5**

**Warranty:**

Successful Mitigation — Mitigation Maintained Permanently

| 2020 | 2021 | 2022 | 2023 | 2024 | 2025 -∞ |
|---|---|---|---|---|---|

← 602

**Reality:**

Successful Mitigation — Mitigation Maintained Temporarily

| 2020 | 2021 | 2022 | 2023 | 2024 | Permanence Failure |
|---|---|---|---|---|---|

| 2024 | 2025 - ∞ |
|---|---|

Successful Compensation Mitigation — Mitigation Maintained Or Repaired Permanently

← 604

**Permanent Via Repair**

| 2020 | 2021 | 2022 | 2023 | 2024 | 2025-2040 | 2041 | 2042-2100 |
|---|---|---|---|---|---|---|---|

··· ∞  ← 606

**FIG. 6**

**FIG. 7**

**REFERENCES CITED IN THE DESCRIPTION**

**Patent documents cited in the description**

- US 63514040
- US 2002138318 A1
- US 2012290104 A1
- US 2022391921 A1